(19) Europäisches Patentamt
European Patent Office
Office européen des brevets

(11) **EP 2 865 910 A1**

(12) **EUROPEAN PATENT APPLICATION**
published in accordance with Art. 153(4) EPC

(43) Date of publication:
**29.04.2015 Bulletin 2015/18**

(51) Int Cl.:
**F16C 33/46** (2006.01)   **B23B 19/02** (2006.01)
**F16C 19/26** (2006.01)

(21) Application number: **13806464.7**

(22) Date of filing: **20.06.2013**

(86) International application number:
**PCT/JP2013/066930**

(87) International publication number:
**WO 2013/191238 (27.12.2013 Gazette 2013/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.06.2012   JP 2012139973
21.06.2012   JP 2012139974
21.06.2012   JP 2012139975**

(71) Applicant: **NSK Ltd.
Tokyo 141-8560 (JP)**

(72) Inventor: **MINAKAMI, Atsushi
Fujisawa-shi, Kanagawa (JP)**

(74) Representative: **Grünecker Patent- und
Rechtsanwälte
PartG mbB
Leopoldstraße 4
80802 München (DE)**

(54) **ROLLING BEARING, AND SPINDLE DEVICE FOR MACHINE TOOL**

(57)   A rolling bearing (1) is provided with an outer ring (2), an inner ring (3), rollers (4) which are provided in a reliable manner between the outer ring (2) and the inner ring (3), and a retainer (10) which has pockets (11) formed at predetermined intervals in the circumferential direction and respectively retaining the rollers (4). The retainer (10) is of the outer ring guide type or the inner ring guide type. The retainer (10) has retainer guide surfaces on one axial side and the other axial side, respectively, of each of the rollers (4). If the width of the retainer guide surface on the one axial side is $\Delta L1$, the width of the retainer guide surface on the other axial side is $\Delta L2$, and the gap of an axial pocket is $\Delta P$, the rolling bearing (1) satisfies the expressions of $\Delta P \leq \Delta L1 \leq 4 \times \Delta P$ and $\Delta P \leq \Delta L2 \leq 4 \times \Delta P$.

*FIG. 3*

EP 2 865 910 A1

## Description

### Technical Field

The present invention relates to a rolling bearing and a machine tool spindle device, and more particularly, to a rolling bearing for use in a high-speed rotating spindle device for a machine tool, a high speed motor and the like, and a machine tool spindle device using the rolling bearing.

### Background Art

Recently, spindles for machine tools are developed to have an increased speed for high-efficiency machining, and a motor direct connection type, in which a coupling is used, or a so-called motor built-in type, in which a motor is mounted inside a spindle, is mainstream thereof, because transmission efficiency in conventional gear driving and belt driving is poor due to friction in engaged parts of teeth, heat generation by belt slip or the like. For such high speed spindles, a dmn value of bearings used in the spindles is, in most cases, equal to or greater than 500,000. Also, in bearings, in which a lightweight ceramic material (such as silicon nitride) with a smaller specific gravity is employed for rolling elements of the bearings to suppress centrifugal forces of the rolling elements during high-speed rotation, there is a case in which the dmn value exceeds 1,000,000.

For cages used in bearings for such high speed applications, as a synthetic resin material cage having light weight and wear resistance, for example, phenol, polyamide, polyphenylene sulfide (abbreviation: PPS), polyetheretherketone (abbreviation: PEEK), polyimide or the like is used, and is some cases, as a reinforcing material, glass fibers, carbon fibers, aramid fibers or the like is further added.

The cage is adapted to arrange rolling elements at equal intervals in a circumferential direction thereof by pockets formed therein at equal intervals in the circumferential direction. Naturally, it is necessary to provide a proper clearance (pocket clearance) between the inner surfaces of the pockets and the rolling elements to allow the rolling elements to smoothly rotate within the pockets. Also, the cage between inner and outer rings provides a clearance in a radial direction of the bearing, and a radial movement amount of the cage is limited by a smaller one of a clearance between an inner peripheral surface of the outer ring and an inner peripheral surface of the cage or a clearance between an outer peripheral surface of the inner ring and an outer peripheral surface of the cage (guide clearance).

In rolling bearings into which such a cage is incorporated, noises and vibrations called cage noise may occur. As rolling bearings in which occurrence of cage noise or the like is suppressed, for example, rolling bearings according to Patent Documents 1 to 3 are known.

### Prior Art Documents

### Patent Document

Patent Document 1: JP 2004-19921
Patent Document 2: JP H11-344035 A
Patent Document 3: JP 2000-81042 A

### Summary of Invention

### Problem to be Solved by Invention

However, in the rolling bearings according to Patent Documents 1 to 3, there is a room for improvement in suppressing the occurrence of the cage noise.

The present invention has been made in view of the situation described above, and an object thereof is to provide a rolling bearing and a spindle device for a machine tool in which cage noise can be suppressed.

### Means for Solving the Problem

The above object of the present invention is achieved by the following configuration.

(1) A rolling bearing includes an outer ring, an inner ring, a plurality of rollers rollably arranged between the outer ring and the inner ring, and a cage having a plurality of pockets formed at given intervals in a circumferential direction to retain the plurality of rollers, respectively. The cage may be guided in an outer ring guided or inner ring guided manner. The rolling bearing is characterized in that the cage includes a cage guide surface on each side with respect to an axial direction of the rollers, and in that the following expressions (I) and (II) are satisfied.

$$(\text{I}) \quad \Delta P \leq \Delta L1 \leq 4 \times \Delta P$$

$$(\text{II}) \quad \Delta P \leq \Delta L2 \leq 4 \times \Delta P$$

wherein $\Delta L1$ is a width of the cage guide surface on one side, $\Delta L2$ is a width of the cage guide surface on the other side, and $\Delta P$ is a axial pocket clearance.

(2) A rolling bearing includes an outer ring, an inner ring, a plurality of rollers rollably arranged between the outer ring and the inner ring, and a cage having a plurality of pockets formed at given intervals in a circumferential direction to retain the plurality of rollers respectively. The cage may be guided in an outer ring guided or inner ring guided manner. The rolling bearing is characterized in that the cage includes a cage guide surface on one side with respect to an axial direction of the rollers and in that the following expression (III) is satisfied,

$$(\text{III}) \quad \Delta P \leq \Delta L \leq 4 \times \Delta P$$

wherein $\Delta L$ is a width of the cage guide surface, and $\Delta P$ is a axial pocket clearance.

(3) The rolling bearing according to (1) or (2) is used with grease lubrication. The cage is provided with a grease reservoir between the rollers and the cage guide surface. A width of the grease reservoir is equal to or greater than the width of the cage guide surface.

(4) The rolling bearing according to any one of (1) to (3), wherein the cage guide surface of the cage is provided axially inward of an end of a guiding surface of the guiding ring. A distance from the cage guide surface to the end of the guiding surface of the guiding ring is equal to or greater than the width of the cage guide surface.

(5) The rolling bearing according to any one of (1) to (4), wherein a radial pocket clearance between the rollers and the cage is twice or greater than a guide clearance but not grater than a chamfered length of the guiding ring.

(6) The rolling bearing according to (5), wherein the cage includes a pair of ring portions arranged side by side in an axial direction thereof and a plurality of bar portions arranged at given intervals in the circumferential direction for connecting between the ring portions. The bar portion includes, at an axially middle location on each side with respect to the circumferential direction, a stopper portion protruding toward the roller. The radial pocket clearance is a distance between an inner surface of the stopper portion and a point at which a line intersects the roller, the line being drawn from the inner surface of the stopper portion and parallel to a line segment connecting a rotation axis of the cage and a rotation axis of the roller to each other.

(7) The rolling bearing according to any one of (1) to (6), wherein the roller includes crowned portions formed by gradually reducing a diameter toward an end at each side with respect to the axial direction and along the entire periphery, and a roller straight portion formed by connecting the crowned portions with each other with a constant diameter. The pocket is formed with a pocket straight portion having a straight shape at a portion facing the roller straight portion. The length of the pocket straight portions is equal to or shorter than the length of the roller straight portion.

(8) The rolling bearing according to (7), wherein the length of the pocket straight portion is shorter than a length obtained by subtracting the axial pocket clearance from the length of the roller straight portion.

(9) A rolling bearing includes an outer ring, an inner ring, a plurality of rollers rollably arranged between the outer ring and the inner ring, and a cage having a plurality of pockets formed at given intervals in a circumferential direction thereof for respectively retaining the plurality of rollers. The cage may be guided in an outer ring guided or inner ring guided manner. The roller includes crowned portions formed by gradually reducing a diameter toward and end at each side with respect to an axial direction and along the entire periphery, and a roller straight portion formed by connecting the crowned portions to each other with a constant diameter. The pocket is formed with a pocket straight portion having a straight shape at a portion facing the roller straight portion. The length of the pocket straight portion is equal to or shorter than the length of the roller straight portion.

(10) The rolling bearing according to (9), wherein the length of the pocket straight portions is shorter than a length obtained by subtracting an axial pocket clearance from the length of the roller straight portion.

(11) The rolling bearing according to (9) or (10), wherein grease lubrication is used.

(12) A rolling bearing includes an outer ring, an inner ring, a plurality of rollers rollably arranged between the outer ring and the inner ring, and a cage having a plurality of pockets formed at given intervals in a circumferential direction thereof for respectively retaining the plurality of rollers. The cage may be guided in an outer ring guided or inner ring guided manner. A radial clearance between the roller and the cage is twice or greater than a guide clearance but not greater than a chamfered length of the guiding ring.

(13) The rolling bearing according to (12), wherein the cage includes a pair of ring portions arranged side by side in an axial direction and a plurality of bar portions arranged at given intervals in the circumferential direction to connect the ring portions to each other. The bar portion includes, at an axially middle location on each side with respect to the circumferential direction, a stopper portion protruding toward the roller. The radial clearance is a distance between an inner surface of the stopper portion and a point at which a line intersects the roller, the line being drawn from the inner surface of the stopper portion and parallel to a line segment connecting a rotation axis of the cage and a rotation axis of the roller to each other.

(14) A spindle device for a machine tool is characterized in that the spindle device includes the rolling bearing according to any one of (1) to (13).

**Advantageous Effects of Invention**

According to the rolling bearing as described in the above (1) or (2), because the width of the cage guide surface is narrow, a sliding contact area between the cage guide surface and the guiding ring becomes small and thus friction between the cage guide surface and the guiding ring is reduced, thereby suppressing occurrence of cage noise. Also, grease can easily enter the cage guide surface thereby suppressing occurrence of cage noise and also extending bearing life due to an enhanced lubrication property.

According to the rolling bearing as described in the above (3), because the grease reservoir is provided in the vicinity of the rollers, lubrication property can be further enhanced to extend the bearing life.

According to the rolling bearing as described in the above (4), even if there is a concern about the cage guide surface protruding from the end of the guiding surface of the guiding ring due to a poor precision, a difference in axial thermal expansion between a rotating ring and a fixed ring, or the like, a permissible amount with respect to axial deviation thereof can be ensured, thereby preventing the cage guide surface from protruding from the end of the guiding surface of the guiding ring.

According to the rolling bearing as described in the above (5), because the radial pocket clearance between the rollers and the cage is twice or greater than the guide clearance, even if the cage is whirled during high-speed rotation and thus deformed by being pressed against the outer ring due to a force corresponding to the revolution per minute thereof, the radial pocket clearance can be kept sufficiently large, thereby suppressing occurrence of cage noise. In the present description, the term 'whirl' is intended to include whirling of a rotating shaft and deformation of the cage into an elliptical shape due to influences, such as nonuniformity in density of the cage, accompanied with a centrifugal force.

In addition, because friction between the cage and the rollers is not increased, seizing due to an abnormal temperature rise can be also prevented.

In addition, because the radial pocket clearance is equal to or smaller than the chamfered length of the guiding ring, when an assembly, in which the inner ring, the cage and the rollers are assembled together, is inserted in the outer ring from an axial direction, interference between the end of the outer ring and the rollers can be suppressed, thereby suppressing deterioration of assembly ability thereof.

According to the rolling bearing as described in the above (6), the stopper portions can reliably prevent falling out of rollers, while suppressing occurrence of cage noise.

According to the rolling bearing as described in the above (7), because the length of the pocket straight portions is set to be equal to or smaller than the length of the roller straight portion, sliding contact between ends of the roller straight portion and the straight portions of the cage when the cage is inclined can be suppressed, thereby suppressing cage noise.

According to the rolling bearing as described in the above (8), the cage can be moved by the axial pocket clearance, and thus by setting the length of the pocket straight portions of the cage to be less than a length obtained by subtracting the axial pocket clearance from the length of the roller straight portion, cage noise can be suppressed even if the cage is moved by the axial pocket clearance.

According to the rolling bearing as described in the above (9), because the length of the pocket straight portions is set to be equal to or smaller than the length of the roller straight portion, sliding contact between ends of the roller straight portion and the pocket straight portions when the cage is inclined can be suppressed, thereby suppressing cage noise.

According to the rolling bearing as described in the above (10), the cage can be moved by an axial pocket clearance, and thus by setting the length of the pocket straight portions of the cage to be less than a length obtained by subtracting the axial pocket clearance from the length of the roller straight portion, cage noise can be suppressed even if the cage is moved by the axial pocket clearance.

According to the rolling bearing as described in the above (11), because the length of the pocket straight portions has been shortened, grease can easily penetrate into the roller straight portion, thereby providing an enhanced lubrication property.

According to the rolling bearing as described in the above (12), because the radial clearance between the rollers and the cage is twice or greater than the guide clearance, cage noise can be suppressed even if the cage is whirled during high-speed rotation and thus deformed by being pressed against the outer ring due to a force corresponding to the revolution per minute thereof. Also, because friction between the cage and the rollers is not increased, seizing due to an abnormal temperature rise can be also prevented.

In addition, because the radial clearance is equal to or smaller than the chamfered length of the guiding ring, when an assembly, in which the inner ring, the cage and the rollers are assembled together, is inserted in the outer ring from an axial direction, interference between the end of the outer ring and the rollers can be suppressed, thereby suppressing deterioration of assembly ability thereof.

According to the rolling bearing as described in the above (13), the stopper portions can reliably prevent falling out of rollers while suppressing occurrence of cage noise.

According to the spindle device for machine tool as described in the above (14), cage noise can be suppressed even if being rotated at a high speed.

**Brief Description of Drawings**

Fig. 1 is a sectional view of a rolling bearing according to a first embodiment of the present invention.
Fig. 2 is a perspective view of a cage of Fig. 1.
Fig. 3 is a plan view illustrating a portion of the rolling bearing of Fig. 1.
Fig. 4 is a sectional view taken along the line C-C of Fig. 3.
Fig. 5(a) is a plan view of a roller, and Fig. 5(b) is a plan view of the cage.
Fig. 6 is a sectional view of the rolling bearing illustrating a movement and deformation of the cage.
Fig. 7(a) is a diagram illustrating a grease reservoir in the rolling bearing of Fig. 1, and Fig. 7(b) is a diagram illustrating a grease reservoir in a rolling bearing according to a comparative example to the first embodiment.

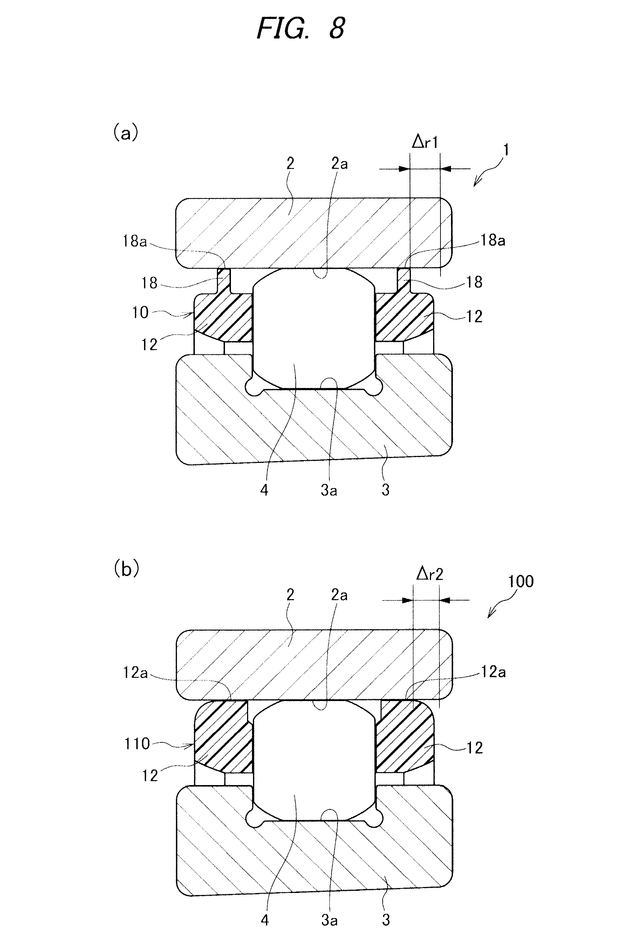

Fig. 8(a) is a diagram illustrating a permissible amount of sliding in the rolling bearing of Fig. 1, and Fig. 8(b) is a diagram illustrating a permissible amount of sliding in a rolling bearing according to a comparative example to the first embodiment.
Fig. 9 is a sectional view of a rolling bearing according to a variant of the first embodiment.
Fig. 10 is a plan view showing a portion of the rolling bearing of Fig. 9.
Fig. 11 is a plan view illustrating a portion of a rolling bearing according to a comparative example to the first embodiment in a state in which a cage is inclined.
Fig. 12 is a sectional view of a rolling bearing according to a second embodiment of the invention.
Fig. 13 is a perspective view of a cage of Fig. 12.
Fig. 14 is a plan view illustrating a portion of the rolling bearing of Fig. 12.
Fig. 15 is a sectional view taken along the line C-C of Fig. 14.
Fig. 16(a) is a plan view of roller, and Fig. 16(b) is a plan view of the cage.
Fig. 17 is a plan view illustrating a portion of a rolling bearing according to a comparative example to the second embodiment in a state in which a cage is inclined.
Fig. 18 is a sectional view of a rolling bearing according to a third embodiment of the invention.
Fig. 19 is a perspective view of a cage of Fig. 18.
Fig. 20 is a plan view showing a part of the rolling bearing of Fig. 18.
Fig. 21 is a sectional view taken along the line C-C of Fig. 20.
Fig. 22 is a sectional view of the rolling bearing illustrating a movement and deformation of the cage.

**Description of Embodiments**

Hereinafter, rolling bearings according to respective embodiments of the present invention will be described in detail with reference to the drawings.

(First Embodiment)

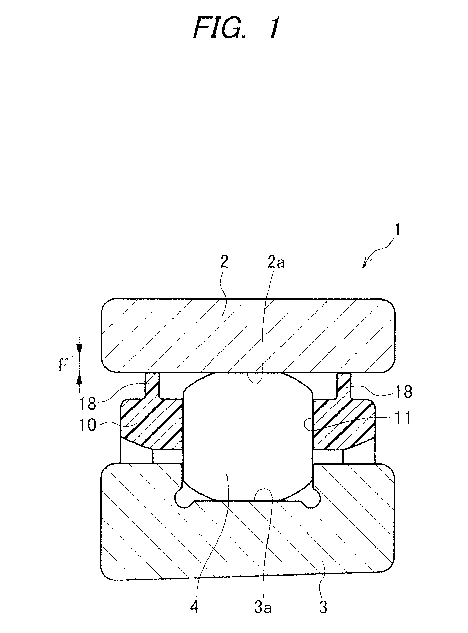

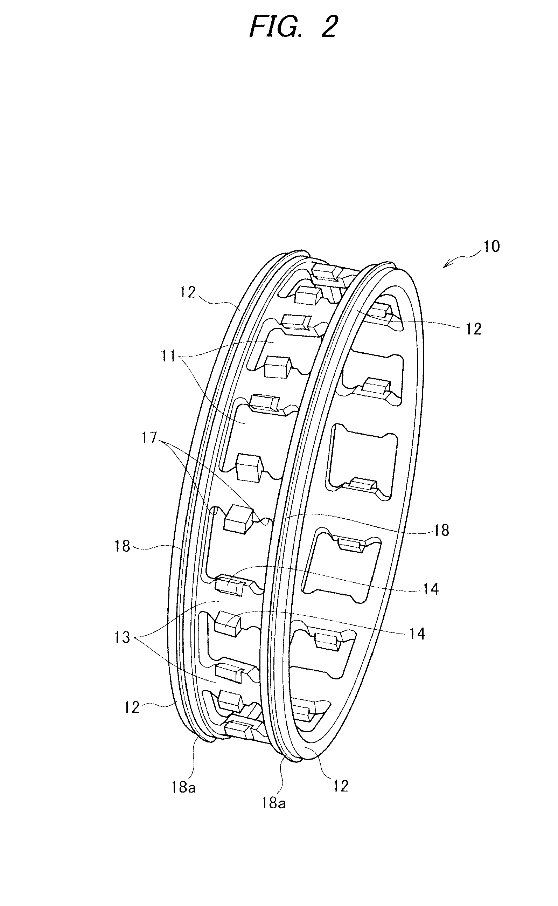

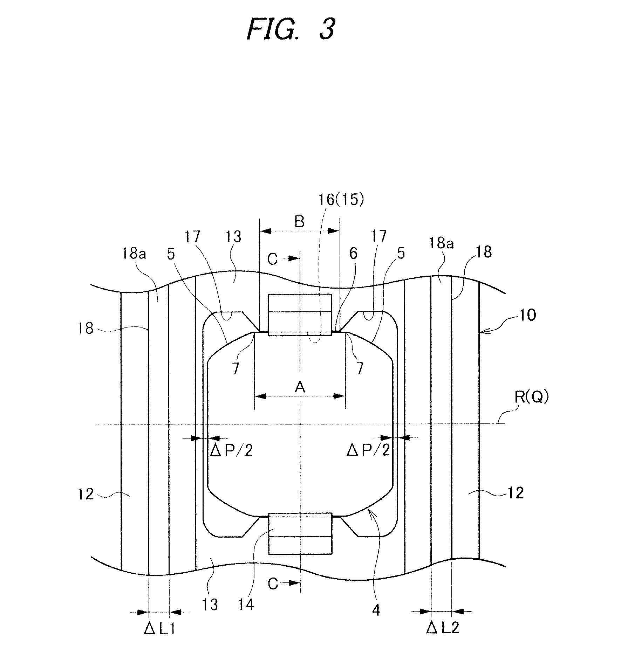

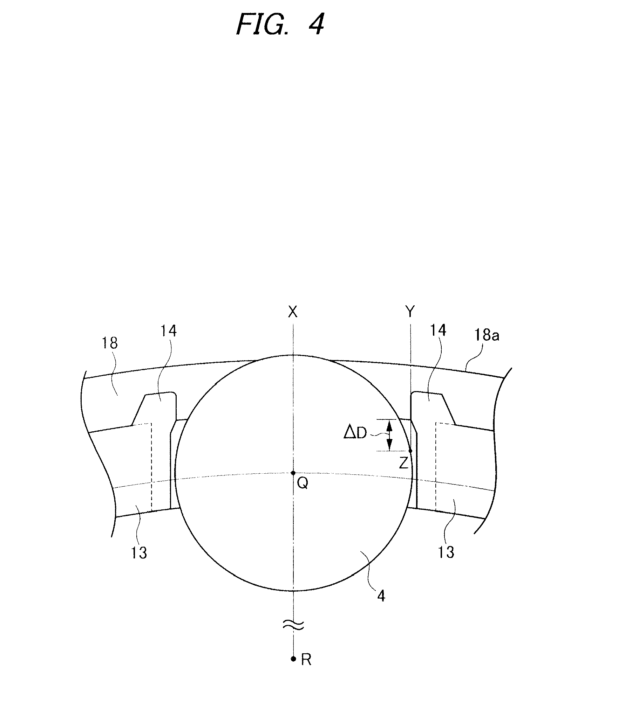

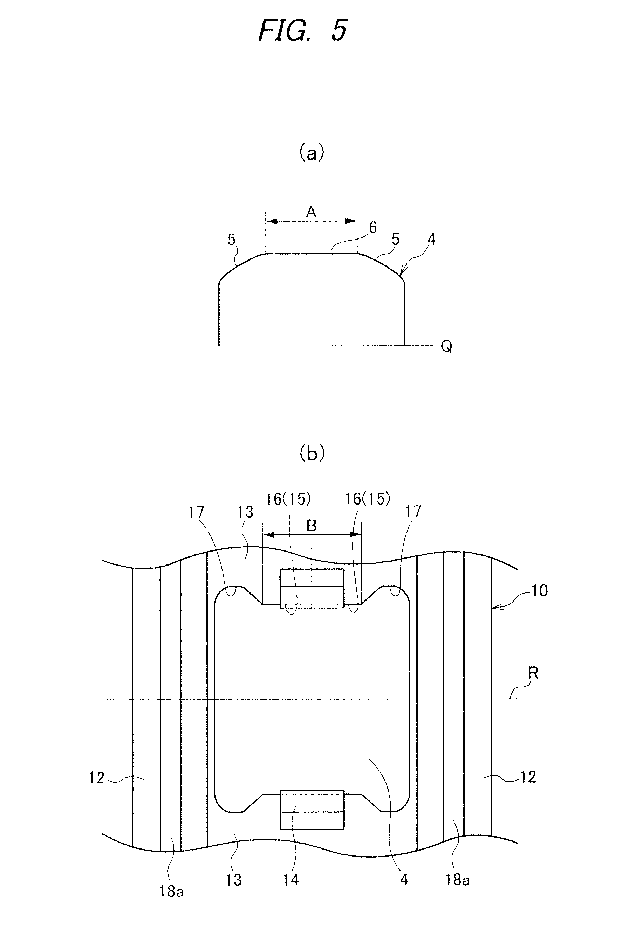

Fig. 1 is a sectional view of a rolling bearing according to a first embodiment of the present invention, Fig. 2 is a perspective view of a cage of Fig. 1, Fig. 3 is a plan view illustrating a portion of the rolling bearing of Fig. 1, Fig. 4 is a sectional view taken along the line C-C of Fig. 3, Fig. 5(a) is a plan view of a roller, and Fig. 5(b) is a plan view of the cage.

The rolling bearing 1 according to the first embodiment of the present invention, as shown in Fig. 1, includes an outer ring 2 having an outer ring raceway surface 2a on an inner peripheral surface thereof, an inner ring 3 having an inner ring raceway surface 3a on an outer peripheral surface thereof, a plurality of rollers (rolling elements) 4 rollably arranged between the outer ring raceway surface 2a and the inner ring raceway surface 3a, and a cage 10 having a plurality of pockets 11 formed at given intervals in a circumferential direction thereof for respectively retaining the plurality of rollers 4, and uses grease lubrication.

The rollers 4, as shown in Fig. 5(a), is formed by crowned portions 5, 5, which are formed by gradually reducing diameters of both sides thereof in a direction of a rotation axis Q over the entire periphery as it goes toward each end thereof, and a roller straight portion 6, which is formed by connecting the crowned portions 5, 5 with each other to have a constant diameter dimension. Lengths of the crowned portions 5, 5 and the roller straight portion 6, an inclined angle between the crowned portions 5, 5 and the roller straight portion 6, or the like are preferable to be optionally set depending on use conditions or use purposes, and accordingly arc not particularly limited herein.

As shown in Figs. 2 to 4, the cage 10 has a pair of ring portions 12 arranged side by side in an axial direction thereof and a plurality of bar portions 13 arranged at given intervals in a circumferential direction thereof for connecting between both ring portions 12, and the pockets 11 are formed by the pair of ring portions 12 and the adjacent bar portions 13.

At an axially middle location on each side of the bar portion 13 with respect to the circumferential direction, as shown in Fig. 5(b), a pocket straight portion 15 having a straight shape is formed. The pocket straight portions 15 are formed to be parallel to a rotation axis R of the cage 10 and forms circumferentially-facing side walls 16. Thus, in a state in which the cage 10 is not inclined, the rotation axis R of the cage 10 and the rotation axis Q of the roller 4 are coincided with each other as viewed in a plan view, and therefore, the pocket straight portions 15 (circumferentially-facing side walls 16) and the roller straight portion 6 are adapted to be parallel to each other (see Fig. 3). The circumferentially-facing side walls 16 oppose the roller straight portion 6, which is a rolling surface of the roller 4, and serve as a rolling element retaining surface.

Also, at the axially middle location on each side of the bar portion 13 with respect to the circumterential direction, a stopper portion 14 is provided to protrude from a radially outer surface of the bar portion 13 and to slightly protrude from the circumferentially-facing side wall 16 of the bar portion 13 toward the roller 4 so as to reliably retain the cylindrical roller 4.

The circumferentially-facing side walls 16 form a flat surface as viewed from the rotation axis direction as shown in Fig. 4, and a radial pocket clearance $\Delta D$ is provided between an inner surface of the stopper portion 14 of the cage 10 and an intersection point Z between the roller 4 and the line Y, which is drawn from the inner surface of the stopper portion 14 to be parallel to a line segment X connecting the rotation axis R and the rotation axis Q to each other (see Fig. 4). In the axial direction, an axial pocket clearance $\Delta P$ ($\Delta P/2$ on either side of the roller 4 in the circumferential direction) is provided between the roller 4 and the pocket 11 (see Fig. 3).

Also, at both axial ends on each side of the bar portion 13 with respect to the circumferential direction, grease reservoirs 17 are provided to be recessed from the circumferentially-facing side wall 16.

On an axially middle portion of the ring portion 12, an annular protrusion 18 having a diameter larger than the radially outer surface of the bar portion 13 is formed along the circumferential direction, and an outer peripheral surface 18a of the annular protrusion 18 serve as a cage guide surface. Namely, the cage 10 is an outer ring guided type, in which the outer peripheral surfaces 18a of the annular protrusions 18 are guided by the outer ring raceway surface 2a.

In this case, the outer peripheral surfaces 18a of the annular protrusions 18 are set to satisfy the following expressions (I) and (II):

$$(I) \quad \Delta P \le \Delta L1 \le 4 \times \Delta P$$

$$(II) \quad \Delta P \le \Delta L2 \le 4 \times \Delta P$$

where $\Delta L1$ is a width (axial length) of the outer peripheral surface 18a on one side and $\Delta L2$ is a width (axial length) of the outer peripheral surface 18a on the other side.

The widths $\Delta L1$, $\Delta L2$ of the outer peripheral surfaces 18a means an actual width to which variations such as bending has been considered and can take relationships of $\Delta L1 < \Delta L2$, $\Delta L1 = \Delta L2$, and $\Delta L1 > \Delta L2$, but in any case, set to satisfy the above expressions (I) and (II).

As long as satisfying the above expressions (I) and (II), the annular protrusions 18 are not necessary to be formed on the axial middle parts of the ring portions 12, but if the outer peripheral surfaces 18a of the annular protrusions 18 are formed on locations separated from both ends of the ring portions 12, preferably on the axial middle parts, the effects as described below are obtained.

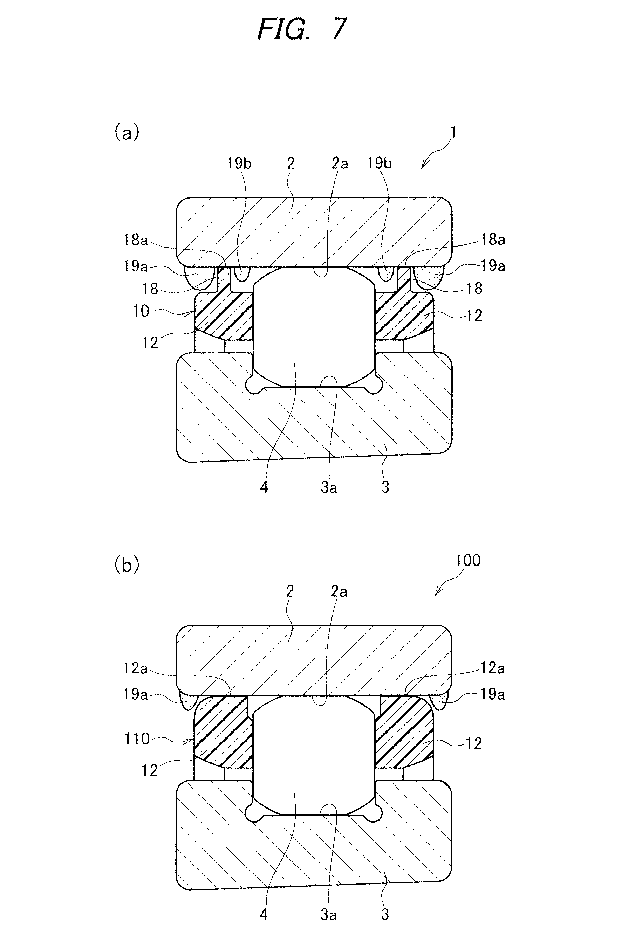

Fig. 7(a) is a sectional view of the rolling bearing according to the present embodiment, and Fig. 7(b) is a sectional view of a rolling bearing according to a comparative example to the first embodiment.

In the rolling bearing 100 according to the comparative example to the first embodiment, a cage 110 is an outer ring guided type, in which outer peripheral surfaces 12a of ring portions 12 are guided by an outer ring raceway surface 2a, and as shown in Fig. 7(b), the outer peripheral surfaces 12a of both ring portions 12 having a diameter larger than a radially outer surface of bar portions 13 serve as cage guide surfaces. Widths $\Delta$L1, $\Delta$L2 of the outer peripheral surfaces 12a are set to be $\Delta$L1 > 4$\times\Delta$P and $\Delta$L2 > 4$\times\Delta$P, and configurations other than the widths $\Delta$L1, $\Delta$L2 of the outer peripheral surfaces 12a are the same as those of the rolling bearing 1 of the present embodiment.

According to such a conventional rolling bearing 100, the cage guide surface (outer peripheral surfaces 12a) have a broad width, so that an area thereof to be slidingly contacted with the outer ring raceway surface 2a is large and thus an increased friction is occurred between the cage guide surfaces (outer peripheral surfaces 12a) and the outer ring raceway surface 2a, thereby causing a high cage noise.

In addition, because the cage guide surfaces (outer peripheral surfaces 12a) are just next to both sides of the roller 4, there was a problem in that a grease reservoir 19a is generated outside of the cage 110 when the bearing is rotated, but if the cage guide surfaces (outer peripheral surfaces 12a) are wide, a base oil is difficult to penetrate between the cage guide surfaces (outer peripheral surfaces 12a) and the outer ring raceway surface 2a, thereby increasing friction of the cage 110. Also, there was a problem in that, due to an increased friction of the cage 110, cage noise is likely to be occurred, thereby reducing bearing life.

Further, there was a problem in that when the bearing is rotated, the grease reservoir 19a is generated outside of the cage 110, but on the vicinity (both sides) of the roller 4, grease reservoirs are hardly generated, and therefore the base oil is difficult to reach the roller 4 so that an oil film is likely to be broken, thereby slight reducing the bearing life.

In addition, assuming that the conventional rolling bearing 100 is incorporated into a machine tool spindle, an inner ring rotation type is primarily employed in the machine tool spindle, and a temperature distribution of the spindle is adapted to be a temperature of a rotating member (inner ring-side) > a temperature of a stationary member (outer ring-side). Also, in a case of a so-called motor built-in type spindle, in which a motor is provided between a front bearing (fixed side) and a rear bearing (free side) of the spindle, an influence of heat generated by the motor is added. As a result, in such a conventional outer ring guided cage 110, there is a risk that in a main bearing part, which is the free side bearing, an inner ring side thereof is expanded and moved relative to an outer ring 2 toward a rear direction of the spindle, so that the cage guide surfaces (outer peripheral surfaces 12a) protrude from the outer ring raceway surface 2a.

Contrarily, according to the rolling bearing 1 of the present embodiment, as shown in Fig. 7(a), because widths of the cage guide surfaces (outer peripheral surfaces 18a) are set to be narrower, a sliding contact area between the cage guide surfaces (outer peripheral surfaces 18a) and the outer ring raceway surface 2a becomes smaller and thus friction between the cage guide surfaces (outer peripheral surfaces 18a) and the outer ring raceway surface 2a is reduced, thereby suppressing occurrence of cage noise. Also, a base oil can easily penetrate between the cage guide surfaces (outer peripheral surfaces 18a) and the outer ring raceway surface 2a, thereby suppressing occurrence of cage noise and also extending bearing life due to an enhanced lubrication property.

Further, because widths $\Delta$L1, $\Delta$L2 of the cage guide surfaces (outer peripheral surfaces 18a) are set to be narrower so that the cage guide surfaces (outer peripheral surfaces 18a) arc formed at locations spaced from axial ends of the roller, grease reservoirs 19b can be obtained between the annular protrusions 18 and the roller 4, i.e., on both sides of the roller 4. Widths (axial lengths) of the grease reservoirs 19b are preferably equal to or greater than the widths $\Delta$L1, $\Delta$L2 of the annular protrusions 18. In this way, by providing the grease reservoirs 19b in the vicinity of the roller 4, more grease can be allowed to be remained in the bearing, thereby extending the bearing life due to an enhance lubrication property.

In addition, the cage guide surfaces (outer peripheral surfaces 18a) are provided axially inward of ends of the outer ring raceway surface 2a of the outer ring 2, which is a guiding ring, as compared to the conventional rolling bearing 100. A distance $\Delta$r1 from the annular protrusions 18 to the ends of the outer ring raceway surface 2a is preferably equal to or greater than the widths $\Delta$L1, $\Delta$L2 of the cage guide surfaces (outer peripheral surfaces 18a). In this way, by setting the distance $\Delta$r1 from the cage guide surfaces (outer peripheral surfaces 18a) to the ends of the outer ring raceway surface 2a to be large, even if, when being incorporated into a spindle device for a machine tool, there is a concern about protruding the cage guide surfaces from ends of a guiding surface (outer ring raceway surface 2a) of the guiding ring (outer ring 2) due to precision of members forming the spindle device and assembly precision thereof, or a difference in axial thermal expansion between a rotating ring and a fixed ring during operation as described above, a threshold of a sliding amount of the inner ring 3 are increased relative to the conventional cage 110 ($\Delta$r2 < $\Delta$r1), so that a permissible amount with respect to elongation of the spindle can be increased, thereby suppressing the cage guide surfaces (outer peripheral surfaces 18a) from protruding from ends of the guiding surface (outer ring raceway surface 2a) of the outer ring 2.

If the widths $\Delta$L1, $\Delta$L2 of the cage guide surfaces (outer peripheral surfaces 18a) are set to be smaller than the axial pocket clearance $\Delta$P, attitude of the cage 10 becomes unstable so that there is a possibility of increasing a cage noise, and for this reason, the widths are set to be equal to or greater than the axial pocket clearance $\Delta$P.

In addition, in the rolling bearing 1 of the present invention, as shown in Figs. 3 and 5, a length B of the pocket straight portion 15 of the cage 10 is preferably set to be equal to or smaller than a length A of the roller straight portion 6 of the roller 4.

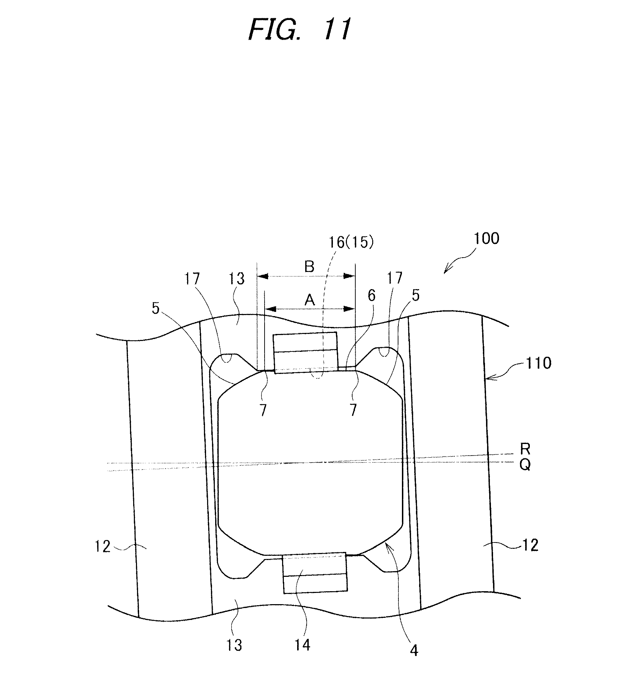

Herein, as a comparative example to the first embodiment, a rolling bearing, in which a length B of a pocket straight portion 15 of a cage is set to be larger than a length A of a roller straight portion 6 of a roller 4, is shown in Fig. 11. Fig. 11 is a case of B = 1.1×A.

In the rolling bearing 100 according to the comparative example to the first embodiment, when the cage 110 is inclined during rotation, straight-portion ends 7, which are connection parts between a roller straight portion 6 and crowned portions 5, are slidingly contacted with circumferentially-facing side walls 16 formed by the pocket straight portions 15 of the cage 110, thereby generating a large frictional force. Also, in Fig. 11, the crowned portions 5 are not in contact with the circumferentially-facing side walls 16, but because an actual distance between the crowned portions 5 and the circumferentially-facing side walls 16 is about a few $\mu$m, there is a risk that the crowned portions 5 as well as the straight-portion ends 7 are contacted with the circumferentially-facing side wall 11, thereby generating a further large frictional force. In this way, the straight-portion ends 7 and the crowned portions 5 of the roller 4 are contacted with the circumferentially-facing side walls 16, as a result of which a large frictional force is generated and thus cage noise is occurred.

Contrarily, by setting the length B of the pocket straight portion 15 of the cage 10 to be equal to or smaller than the length A of the roller straight portion 6 of the roller 4, even if the cage 10 is inclined during rotation, the straight-portion ends 7 and the crowned portions 5 can be avoided from being contacted with the circumferentially-facing side walls 16, thereby preventing generation of a large frictional force and also suppressing cage noise.

The length B of the pocket straight portion 15 of the cage 10 is more preferably less than the length A of the roller straight portion 6 of the roller 4, and also, because the cage 10 can be axially moved by the axial pocket clearance $\Delta$P (see Fig. 3), the length B of the pocket straight portion 15 of the cage 10 is further preferably less than A-$\Delta$P which is obtained by subtracting the axial pocket clearance $\Delta$P from the length A of the roller straight portion 6 of the roller 4. But, because strength of the cage 10 cannot be ensured if the length B of the pocket straight portion 15 is excessively small, the length B of the pocket straight portion 15 is preferably equal to or greater than 0.5 mm.

Further, according to the rolling bearing 1 of the present invention, it is preferable to set the size of the radial pocket clearance $\Delta$D to be twice or greater than the guide clearance $\Delta$E but not greater than a chamfered length F of the outer ring 2 as the guiding ring (see Fig.1), the guide clearance $\Delta$E being a difference between an inner diameter of the outer ring (a radial distance of the outer ring raceway surface 2a as measured along a line passing through a rotation axis of the rolling bearing 1), and an outer diameter of the cage (a radial distance of the outer peripheral surfaces 18a of the annular protrusions 18 as measured along a line passing through the rotation axis of the rolling bearing 1). Here, the chamfered length F is a radial length of chamfered portions obtained by chamfering a corner between an inner peripheral surface and end surfaces of the outer ring 2.

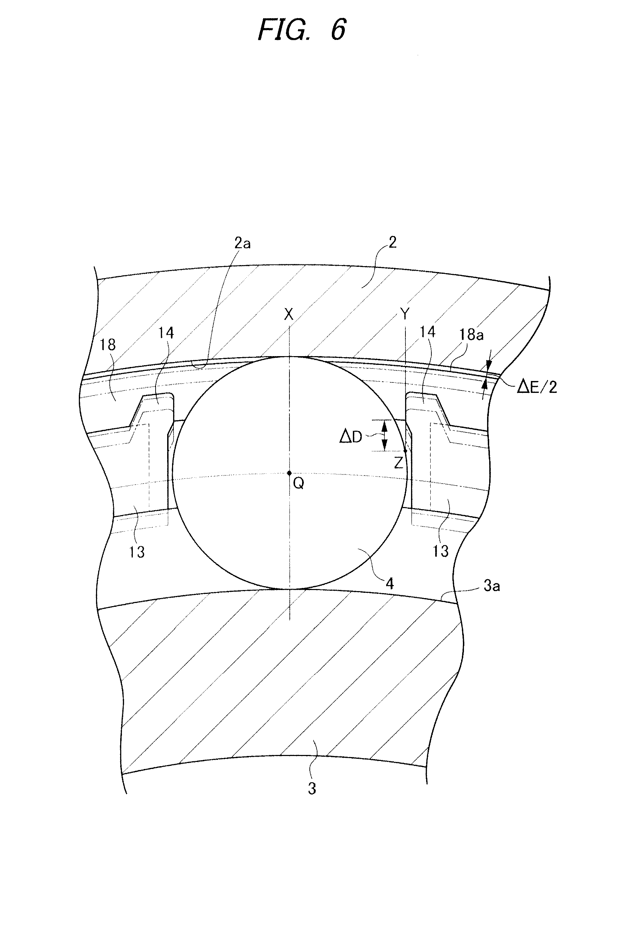

The reason will be now described on the basis of Fig. 6. Fig. 6 is a sectional view of the rolling bearing explaining movement and deformation of the cage.

In the rolling bearing 1, a guide clearance $\Delta$E/2 is obtained on each of the roller 4 side shown in Fig. 6 and the opposite side (a location apart from the roller 4 shown in Fig. 6 by 180°). Therefore, on the roller 4 side shown in Fig. 6, the cage 10 can move radially inward by $\Delta$E/2. In Fig. 6, a solid line shows a non-rotation neutral position of the cage 10, i.e., a position of the cage 10 in a state in which a revolution axis (rotation axis of the rolling bearing 1) of the rollers is coincided with the rotation axis of the cage 10, and a one-dotted chain line shows a state in which the cage 10 has been moved radially inward by $\Delta$E/2. Thus, theoretically, if the radial pocket clearance $\Delta$D is larger than $\Delta$E/2, then the roller 4 is not contacted with the cage 10.

However, if the cage 10 is whirled during high-speed rotation, the cage 10 is deformed by being pressed against the outer ring 2 due to a force corresponding to the revolution per minute thereof. Namely, if the cage 10 is moved radially inward by $\Delta$E/2 to be further pressed against the inner peripheral surface of the outer ring, the cage is deformed into an elliptical shape, and thus on the roller 4 side shown in Fig. 6, the cage 10 is moved radially further inward. A two-dotted chain line in Fig. 6 shows a state in which the cage 10 has been moved (deformed) radially further inward by whirling. In Fig. 6, deformation of the cage 10 in the circumferential direction thereof has been ignored.

When the cage 10 is moved radially further inward by whirling, the radial pocket clearance $\Delta$D is further reduced. Although an amount of the radial pocket clearance $\Delta$D to be reduced due to whirling can be varied depending upon a material, a shape or the like of the cage 10, the radial pocket clearance $\Delta$D in the present invention is overall set to be twice or greater than the guide clearance $\Delta$E, to ensure that movement of the cage 10 due to whirling is allowed by 1.5 times the guide clearance $\Delta$E or more, and also considering the movement amount of $\Delta$F/2. Therefore, even if the cage 10 is whirled, sliding contact between the roller 4 and the cage 10 is prevented. Thus, an increase in friction force due to sliding contact between the roller 4 and the cage 10 is suppressed, thereby suppressing occurrence of cage noise.

If the radial pocket clearance ΔD is excessively large, rollers 4 are dislocated, and thus when an assembly, in which the inner ring 3, the cage 10 and the rollers 4 are assembled together, is inserted in the outer ring 2 from an axial direction, an end of the outer ring interferes with the rollers 4, as a result of which the assembly is difficult to be incorporated therein. Therefore, the radial pocket clearance ΔD is set to be equal to or smaller than the chamfered length F (see Fig. 1) of the outer ring 2, which is the guiding ring. Thus, when the assembly, in which the inner ring 3, the cage 10 and the rollers 4 are assembled together, is inserted in the outer ring 2 from an axial direction, interference between the end of the outer ring and the rollers 4 is suppressed, thereby suppressing deterioration of assembly ability thereof.

In the foregoing embodiment, although on axial middle parts of a pair of ring portions 12, the annular protrusions 18 having a diameter larger than the radially outer surface of the bar portions 13 are formed over the circumferential direction thereof, the annular protrusions 18 are not necessary to be formed on both of the pair of ring portions 12, and accordingly, on only either one, the annular protrusion 18 may be formed.

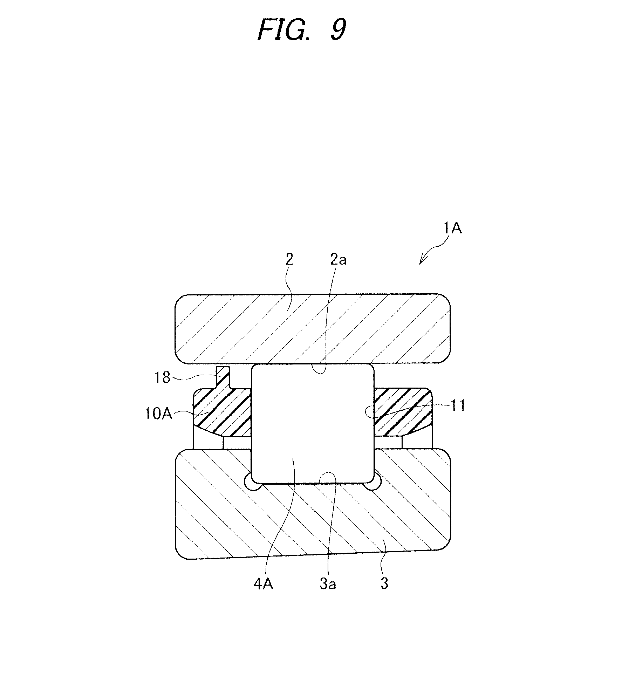

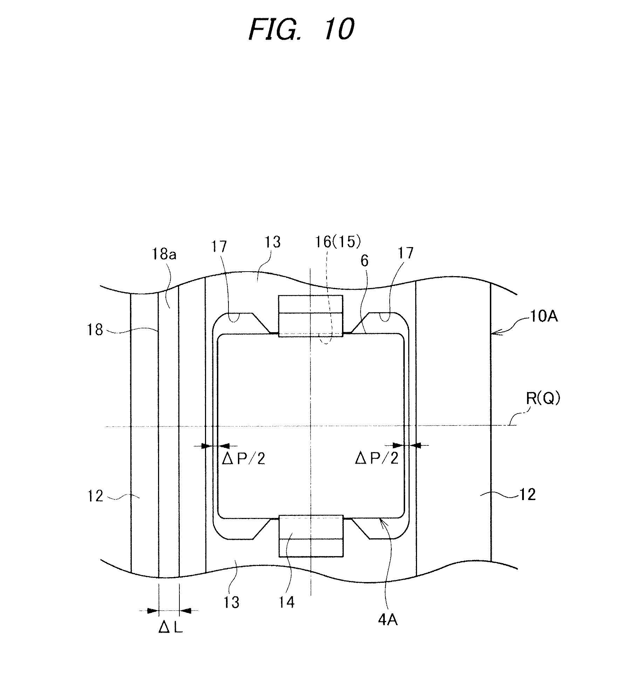

Fig. 9 is a sectional view of a rolling bearing according to a variant of the first embodiment, and Fig. 10 is a plan view showing a part of the rolling bearing in Fig. 9. The same configurations as those of the rolling bearing 1 of the foregoing embodiment are designated by the same reference numerals, and the description thereof will be omitted.

In the rolling bearing 1A according to this variant, an annular protrusion 18 is formed on an axial middle part of only one ring portion 12 of a cage 10A, and an outer peripheral surface 18a of the annular protrusion 18 serves as a cage guide surface. Rollers 4A are a simple cylindrical rollers formed by straight portions 6, in which crowned portions 5, 5 are not formed.

In this case, the outer peripheral surface 18a of the annular protrusion 18 is set to satisfy the following expression (III):

$$(\mathrm{III}) \quad \Delta P \le \Delta L \le 4 \times \Delta P$$

where ΔL is a width (axial length) of the outer peripheral surface 18a.

In this way, by satisfying the above expression (III), the rolling bearing 1A according to the present variant can obtain the same operations and effects as those of the rolling bearing 1 according of the foregoing embodiment. Besides, by applying the relationship between the length B of the pocket straight portion 15 of the cage 10 and the length A of the roller straight portion 6 of the roller 4 and the relationship between the radial pocket clearance ΔD and the guide clearance ΔE, as described with respect to the rolling bearing 1 of the foregoing embodiment, to the rolling bearing 1A according to the present variant, the same operations and effects as those of the rolling bearing 1 of the foregoing embodiment are also obtained.

Subsequently, the effects of the rolling bearing of the first embodiment were verified on the basis of Examples and Comparative examples as described below.

<Cage Noise Evaluation 1>

First, rolling bearings of a bearing number N1011KR (inner diameter: φ55mm, outer diameter: φ90mm, width: 18mm, outer ring: no collar, inner ring: both collars, roller diameter: φ8, roller length: 8 mm) were prepared. A radial clearance after being incorporated was set to -15μm, and as a lubricant, NBU8EP (produced by NOK KLÜBER Co., Ltd.) of 1.5 cc was potted.

Using, as cages, resinous cage made of polyetheretherketone (PEEK) containing carbon fibers, cage noises at revolutions per minute of 4000 to 12000 rpm were evaluated while varying widths ΔL1, ΔL2 of cage guide surfaces from 1 to 6 times of a axial pocket clearance ΔP. The cage was adapted so that cage guide surfaces were provided on both sides thereof as in the cage shown in Fig. 1 and ΔL1, ΔL2 were the same.

As shown in Table 1, a case where the widths ΔL1, ΔL2 of the cage guide surfaces were equal to the axial pocket clearance ΔP was designated as Example 1, cases where being set to be 2 to 4 times of ΔP were respectively designated as Examples 2 to 4, and cases where being set to be 5 and 6 times of ΔP were respectively designated as Comparative examples 1 and 2. In Examples 1 to 4 and Comparative examples 1 and 2, all conditions other than the widths ΔL1, ΔL2 of the cage guide surfaces were the same.

In Table 1, results of the cage noise evaluations are shown in three grades. The evaluation was performed by three grades of ○, Δ, and x. ○ represents a case which has no cage noise and thus no problem at all in use, Δ represents a case which has a low cage noise, but no problem in use, and × represents a case which has a high cage noise and thus cannot be used.

[Table 1]

| | Example 1 (ΔL1, ΔL2 = ΔP) | Example 2 (ΔL1, ΔL2 = 2×ΔP) | Example 3 (ΔL1, ΔL2 = 3×ΔP) | Example 4 (ΔL1, ΔL2 = 4×ΔP) | Comparative Example 1 (ΔL1, ΔL2 = 5×ΔP) | Comparative Example 2 (ΔL1, ΔL2 = 6×ΔP) |
|---|---|---|---|---|---|---|
| 4000 rpm | △ | △ | △ | △ | × | × |
| 6000 rpm | △ | △ | △ | △ | × | × |
| 8000 rpm | ○ | ○ | △ | △ | × | × |
| 10000 rpm | ○ | ○ | ○ | ○ | × | × |
| 12000 rpm | ○ | ○ | ○ | ○ | △ | × |

From the results of Table 1, it is concluded that Comparative examples 1 and 2, in which the widths ΔL1, ΔL2 of the cage guide surfaces are set to be 5 and 6 times of the axial pocket clearance ΔP, have cage noises occurred to be too high to be used, substantially regardless of revolutions per minute. Contrarily, it can be found that Examples 1 to 4, in which the widths ΔL1, ΔL2 of the cage guide surfaces are set to be 1 to 4 times of the axial pocket clearance ΔP, have low cage noises or are classified as no cage noise, regardless of revolutions per minute, and thus, cage noise is suppressed.

As described above, according to the rolling bearing 1 of the present invention, it can be found that by setting to be ΔP < ΔL1 ≤ 4×ΔP and ΔP ≤ ΔL2 < 4×ΔP, where ΔL1, ΔL2 are widths of the cage guide surfaces and ΔP is the axial pocket clearance, a sliding contact area between the cage guide surfaces and the guiding ring becomes smaller and thus friction between the cage guide surfaces and the guiding ring is reduced, thereby suppressing occurrence of cage noise.

<Lubrication Property Evaluation>

Next, rolling bearings of a bearing number N1011KR (inner diameter: φ55mm, outer diameter: φ90mm, width: 18mm, outer ring: no collar, inner ring: both collars, roller diameter: φ8, roller length: 8 mm) were prepared. A radial clearance after being incorporated was set to -5μm, and as a lubricant, NBU8EP (produced by NOK KLÜBER Co., Ltd.) of 1.5 cc was potted.

Using, as cages, resinous cages made of polyetheretherketone (PEEK) containing carbon fibers. endurance tests were performed at 12000 rpm during 2000 hours and then grease residual ratios, oil separation ratios, and iron power amounts were evaluated.

As shown in Table 2, a case where the widths ΔL1, ΔL2 of the cage guide surfaces were set to be 3 times of the axial pocket clearance ΔP was designated as Example 5, and a case where being set to be 6 times of ΔP was designated as Comparative example 3.

[Table 2]

| | Residual Ratio (%) | Oil Separation Ratio (%) | Iron Powder Amount (%) |
|---|---|---|---|
| Example 5 (ΔL1, ΔL2 = 3×ΔP) | 65 | 1.5 | 0 |
| Comparative Example 3 (ΔL1, ΔL2 = 6×ΔP) | 48 | 15 | 0.3 |

From the results of Table 2, it can be found that Example 5, in which the widths ΔL1, ΔL2 of the cage guide surfaces are set to be 3 times of the axial pocket clearance ΔP, has a higher grease residual ratio, a lower oil separation ration and a smaller iron powder amount, as compared to Comparative example 3, in which the widths ΔL1, ΔL2 of the cage guide surfaces are set to be 6 times of the axial pocket clearance ΔP. It is believed that the reason is because grease reservoirs in Example 5 have wider spaces to increase a residual amount of grease, and also due to such an increased residual amount of grease, lubrication to rollers or cage guide surfaces are sufficiently performed so that wear is not occurred.

<Cage Noise Evaluation 2>

Next, using Example 4 in <Cage Noise Evaluation 1> described above, i.e., the case where the widths $\Delta L1$, $\Delta L2$ of the cage guide surfaces were set to be 4 times of the axial pocket clearance $\Delta P$, cage noises at revolutions per minute of 4000 to 12000 rpm were evaluated while varying a relationship between a length B of a pocket straight portion and a length A of a roller straight portion.

As shown in Table 3, a case where the relationship between the length B of the pocket straight portion and the length A of the roller straight portion was set to be B = 0.6xA was designated as Example 4a, a case where being set to be B = A-$\Delta P$ was designated as Example 4b, a case where being set to be B = A was designated as Example 4c, and a case where being set to be B = 1.5×A was designated as Example 4d. Evaluation criteria are the same as those in <Cage Noise Evaluation 1> described above.

[Table 3]

| | Example 4a (B = 0.6xA) | Example 4b (B = A-$\Delta P$) | Example 4c (B = A) | Example 4d (B = 1.5xA) |
|---|---|---|---|---|
| 4000 rpm | $\Delta$ | $\Delta$ | $\Delta$ | $\times$ |
| 6000 rpm | $\Delta$ | $\Delta$ | $\Delta$ | $\times$ |
| 8000 rpm | $\bigcirc$ | $\bigcirc$ | $\Delta$ | $\times$ |
| 10000 rpm | $\bigcirc$ | $\bigcirc$ | $\bigcirc$ | $\times$ |
| 12000 rpm | $\bigcirc$ | $\bigcirc$ | $\bigcirc$ | $\Delta$ |

From the results of Table 3, it can be found that Examples 4a to 4c, in which the length B of the pocket straight portion of the cage is set to be equal to or smaller than the length A of the roller straight portion, have low cage noises or are classified as no cage noise, regardless of revolutions per minute, and thus, cage noise is suppressed.

In this way, in addition to setting the widths $\Delta L1$, $\Delta L2$ of the cage guide surfaces to be $\Delta P \leq \Delta L1 \leq 4 \times \Delta P$ and $\Delta P \leq \Delta L2 \leq 4 \times \Delta P$, by setting the length B of the pocket straight portion 15 of the cage 10 to be equal to or smaller than the length A of the roller straight portion 6, sliding contact between the straight-portion ends 7 of the roller and the pocket straight portions 15 when the cage 10 is inclined can be suppressed, thereby further suppressing cage noise.

<Cage Noise Evaluation 3>

Next, using Example 4 in <Cage Noise Evaluation 1> described above, i.e., the case where the widths $\Delta L1$, $\Delta L2$ of the cage guide surfaces were set to be 4 times of the axial pocket clearance $\Delta P$ cage noises at revolutions per minute of 4000 to 12000 rpm were evaluated while varying a radial pocket clearance $\Delta D$ between the roller and the cage.

As shown in Table 4, a case where the radial pocket clearance $\Delta D$ was set to be 1.5 times of a guide clearance $\Delta E$ was designated as Example 4e, and a case where the radial pocket clearance $\Delta D$ was set to be 2 times of the guide clearance $\Delta E$ was designated as Example 4f. Evaluation criteria are the same as those in <Cage Noise Evaluation 1> described above.

[Table 4]

| | Example 4e ($\Delta D=1.5\times\Delta E$) | Example 4f ($\Delta D=2\times\Delta E$) |
|---|---|---|
| 4000 rpm | $\times$ | $\Delta$ |
| 6000 rpm | $\times$ | $\Delta$ |
| 8000 rpm | $\times$ | $\Delta$ |
| 10000 rpm | $\Delta$ | $\bigcirc$ |
| 12000 rpm | $\Delta$ | $\bigcirc$ |

From the results of Table 4, it can be found that Example 4f, in which the radial pocket clearance $\Delta D$ is set to be 2 times of the guide clearance $\Delta E$, has a low cage noise or is classified as no cage noise, regardless of revolutions per minute, and thus, cage noise is suppressed. It is believed that the reason is because, in Example 4f, in which the radial pocket clearance $\Delta D$ is set to be 2 times of the guide clearance $\Delta E$, an amount of the radial pocket clearance $\Delta D$ to be reduced due to whirling is ensured by 1.5 times of the guide clearance $\Delta E$, except a movement amount of $\Delta E/2$ ($2 \times \Delta E - \Delta E/2$), and therefore the radial pocket clearance $\Delta D$ can be sufficiently ensured so that rollers are not contacted with the cage, thereby suppressing occurrence of cage noise.

In this way, in addition to setting the widths $\Delta L1$, $\Delta L2$ of the cage guide surfaces to be $\Delta P \leq \Delta L1 \leq 4 \times \Delta P$ and $\Delta P \leq \Delta L2 \leq 4 \times \Delta P$ by setting the radial pocket clearance $\Delta D$ to be twice or greater than the guide clearance $\Delta E$, even if the cage 10 is whirled during high-speed rotation and thus deformed by being pressed against the outer ring 2 due to a force corresponding to the revolution per minute thereof, the radial pocket clearance can be kept sufficiently large, thereby further suppressing occurrence of cage noise. In addition, because friction between the cage 10 and the rollers 4 is not increased, seizing due to an abnormal temperature rise can be also prevented.

<Cage Noise Evaluation 4>

Next, using Example 4 in <Cage Noise Evaluation 1> described above, i.e., the case where the widths $\Delta L1$, $\Delta L2$ of the cage guide surfaces were set to be 4 times of the axial pocket clearance $\Delta P$, and Comparative example 1 in <Cage Noise Evaluation 1> described above, i.e., the case where the widths $\Delta L1$, $\Delta L2$ of the cage guide surfaces were set to be 5 times of the axial pocket clearance $\Delta P$, cage noises at revolutions per minute of 4000 to 12000 rpm were evaluated in a state in which the relationship between the length B of the pocket straight portion and the length A of the roller straight portion was set to be $B = A - 2 \times \Delta P$ and also the radial pocket clearance $\Delta D$ between the roller and the cage was set to be $\Delta D = 2 \times \Delta E$.

As shown in Table 5, a case which corresponded to Example 4 in <Cage Noise Evaluation 1> described above was designated as Example 4g and a case which corresponded to Comparative example 1 in <Cage Noise Evaluation 1> described above was designated as Comparative example 1a. Evaluation criteria are the same as those in <Cage Noise Evaluation 1> described above.

[Table 5]

| | Example 4g ($\Delta L1$, $\Delta L2 = 4 \times \Delta P$) (B = A-$2 \times \Delta P$) ($\Delta D = 2 \times \Delta E$) | Comparative Example 1a ($\Delta L1$, $\Delta L2 = 5 \times \Delta P$) (B = A-$2 \times \Delta P$) ($\Delta D = 2 \times \Delta E$) |
|---|---|---|
| 4000 rpm | ○ | Δ |
| 6000 rpm | ○ | Δ |
| 8000 rpm | ○ | Δ |
| 10000 rpm | ○ | Δ |
| 12000 rpm | ○ | ○ |

From the results of Table 5, it can be found that in Example 4g, in which the widths $\Delta L1$, $\Delta L2$ of the cage guide surfaces are set to be 4 times of the axial pocket clearance $\Delta P$ and also the other conditions are set to be such suitable values, cage noise is suppressed as compared to Comparative example 1a, in which the widths $\Delta L1$, $\Delta L2$ of the cage guide surfaces are set to be 5 times of the axial pocket clearance $\Delta P$ but the other conditions are set to be such suitable values.

Although the crowned rollers 4 are used in the rolling bearing 1 according to the foregoing embodiment and the simple cylindrical rollers 4A are used in the rolling bearing 1A according to the variant, either one of the rollers 4 and 4A may be employed.

Also, for example, the circumferentially-facing side walls 16 may be adapted to form a circular arc-shaped surface along a curvature of the roller 4 as viewed in the rotation axis direction, as long as having the pocket straight portions 15 becoming a straight shape as viewed in a plan view.

Further, although the rolling bearing I has been described with the cage 10 being guided in an outer ring guided manner in the foregoing embodiment, the cage 10 may be guided in an inner ring guided manner.

(Second Embodiment)

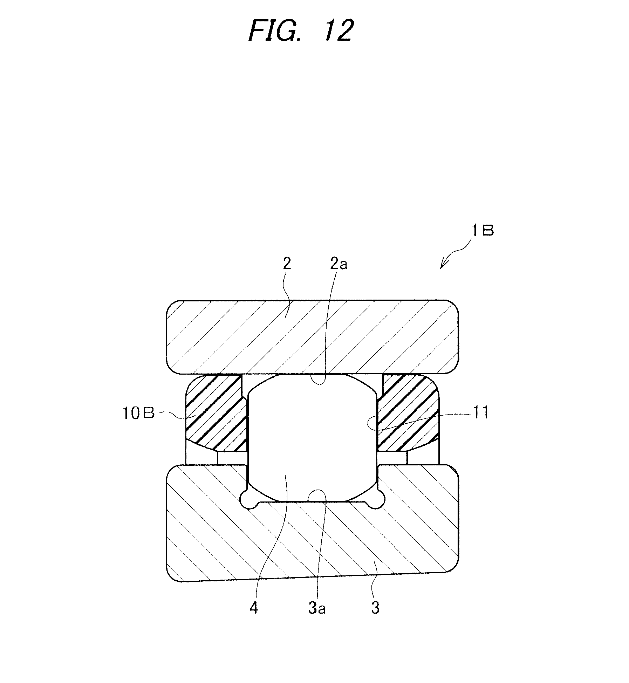

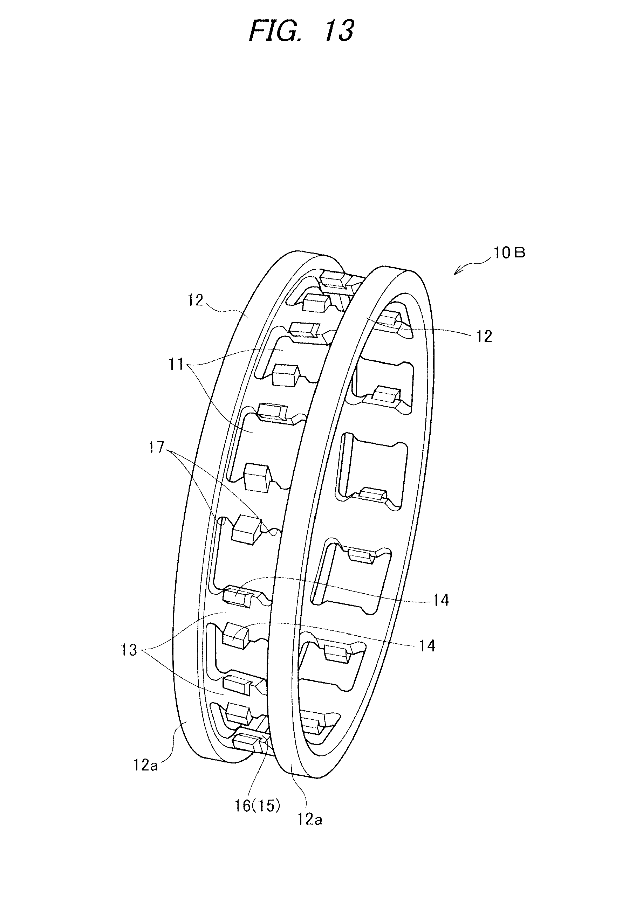

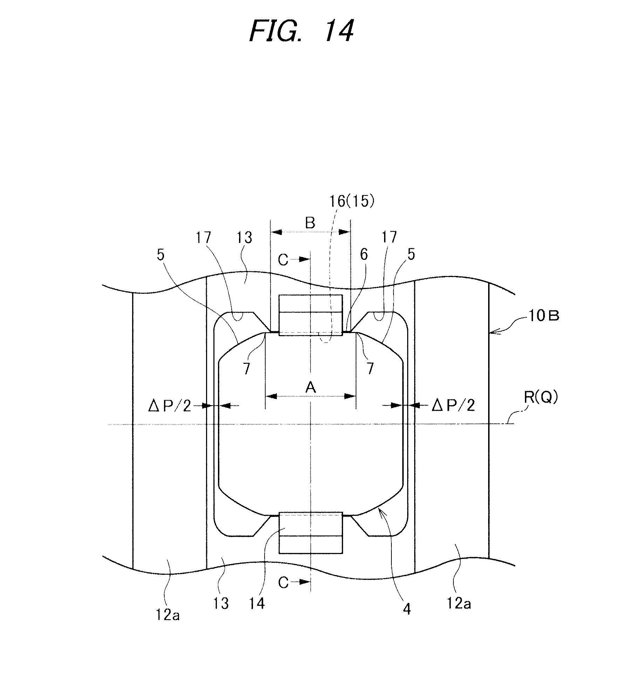

Next, a rolling bearing according to a second embodiment of the present invention will be described in detail with reference to the drawings. Fig. 12 is a sectional view of a rolling bearing according to an embodiment of the invention, Fig. 13 is a perspective view of a cage of Fig. 12, Fig. 14 is a plan view illustrating a portion of the rolling bearing of Fig.

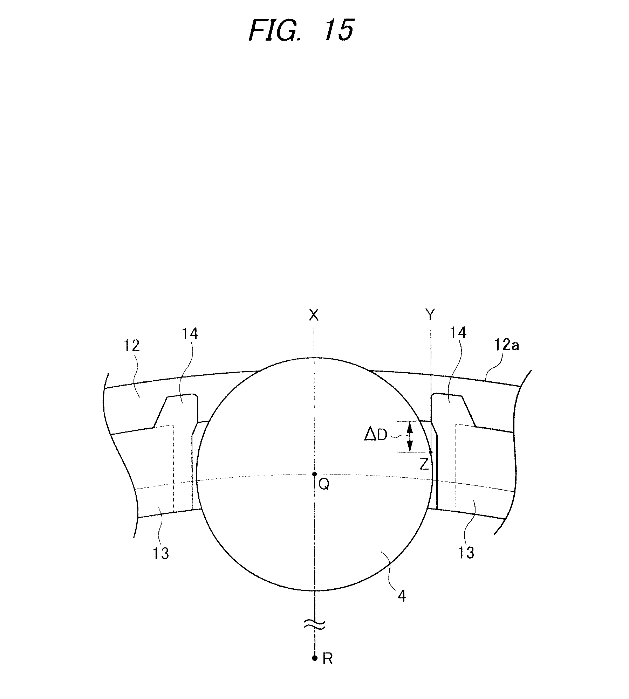

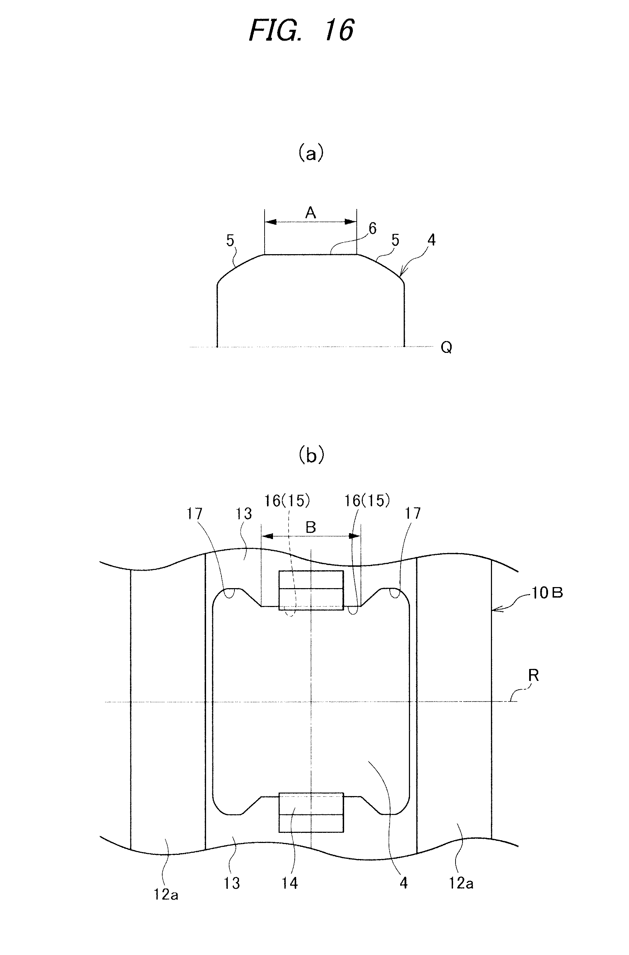

12, Fig. 15 is a sectional view taken along the line C-C of Fig. 14, Fig. 16(a) is a plan view of a roller, and Fig. 16(b) is a plan view of the cage.

The rolling bearing 1B according to the second embodiment of the present invention, as shown in Fig. 12, includes an outer ring 2 having an outer ring raceway surface 2a on an inner peripheral surface thereof, an inner ring 3 having an inner ring raceway surface 3a on an outer peripheral surface thereof, a plurality of rollers (rolling elements) 4 rollably arranged between the outer ring raceway surface 2a and the inner ring raceway surface 3a, and a cage 10B having a plurality of pockets 11 formed at given intervals in a circumferential direction thereof for respectively retaining the plurality of rollers 4, and uses grease lubrication.

The roller 4, as shown in Fig. 16(a), is formed by crowned portions 5, 5, which are formed by gradually reducing diameters of both sides thereof in a direction of a rotation axis Q over the entire periphery as it goes toward each end thereof, and a roller straight portion 6, which is formed by connecting the crowned portions 5, 5 with each other to have a constant diameter dimension. Lengths of the crowned portions 5, 5 and the roller straight portion 6, an inclined angle between the crowned portions 5, 5 and the roller straight portion 6, and the like are preferable to be optionally set depending on use conditions or use purposes, and accordingly are not particularly limited herein.

As shown in Figs. 13 to 15, the cage 10B has a pair of ring portions 12 arranged side by side in an axial direction thereof and a plurality of bar portions 13 arranged at given intervals in a circumferential direction thereof for connecting between both ring portions 12, and the pockets 11 are formed by the pair of ring portions 12 and the adjacent bar portions 13.

At an axially middle location on each side of the bar portion 13 with respect to the circumferential direction, as shown in Fig. 16(b), a pocket straight portion 15 having a straight shape is formed. The pocket straight portion 15 is formed to be parallel to a rotation axis R of the cage 10B and forms a circumferentially-facing side wall 16. Thus, in a state in which the cage 10B is not inclined, the rotation axis R of the cage 10B and the rotation axis Q of the roller 4 are coincided with each other as viewed in a plan view, and therefore, the pocket straight portions 15 (circumferentially-facing side walls 16) and the roller straight portion 6 are adapted to be parallel to each other (see Fig. 14). The circumferentially-facing side walls 16 oppose the roller straight portion 6, which is a rolling surface of the roller 4, and serve as a rolling element retaining surface.

Also, at the axially middle location on each side of the bar portions 13 with respect to the circumferential direction, a stopper portion 14 is provided to protrude from a radially outer surface of the bar portion 13 and to slightly protrude from the circumferentially-facing side wall 16 of the bar portion 13 toward the roller 4 so as to reliably retain the cylindrical roller 4.

The circumferentially-facing side walls 16 form a flat surface as viewed from the rotation axis direction, and a radial pocket clearance ΔD is provided between an inner surface of the stopper portion 14 of the cage 10B and an intersection point Z between the roller 4 and a line Y, which is drawn from the inner surface of the stopper portion 14 to be parallel to a line segment X connecting the rotation axis R and the rotation axis Q to each other (see Fig. 15). In the axial direction, an axial pocket clearance ΔP (ΔP/2 on either side of the roller 4 in the circumferential direction) is provided between the roller 4 and the pocket 11 (see Fig. 14).

Also, at both axial ends on each side of the bar portions 13 with respect to the circumferential direction, grease reservoirs 17 are provided to be recessed from the circumferentially-facing side wall 16.

The cage 10B is an outer ring guided type, in which outer peripheral surfaces 12a of both ring portions 12 having a diameter larger than radially outer surfaces of the bar portions 13 are guided by the outer ring raceway surface 2a.

Subsequently, as a feature of the present invention, a relationship between a length B of the pocket straight portion 15 of the cage 10B and a length A of the roller straight portion 6 of the roller 4 will be described.

In the rolling bearing B1 of the present invention, as shown in Figs. 14 and 16, the length B of the pocket straight portion 15 of the cage 10B is set to be equal to or smaller than the length A of the roller straight portion 6 of the roller 4.

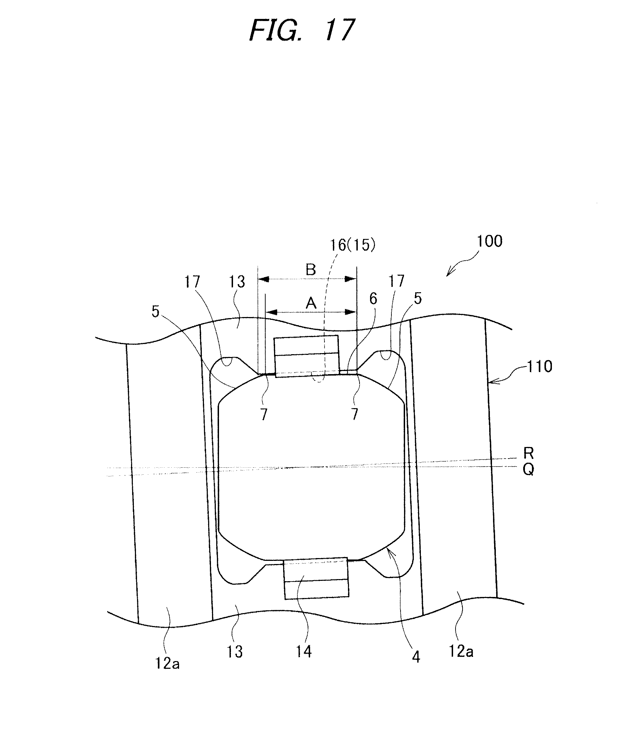

Herein, as a comparative example to the second embodiment, a rolling bearing, in which a length B of a pocket straight portion 15 of cage is set to be larger than a length A of a roller straight portion 6 of a roller 4, is shown in Fig. 17. Fig. 17 is a case of B = 1.1×A.

In the rolling bearing 100 according to the comparative example to the second embodiment, when the cage 110 is inclined during rotation, straight-portion ends 7, which are connection parts between a roller straight portion 6 and crowned portions 5, are slidingly contacted with circumferentially-facing side walls 16 formed by the pocket straight portions 15 of the cage 110, thereby generating a large frictional force. Also, in Fig. 17, the crowned portions 5 are not in contact with the circumferentially-facing side walls 16, but because an actual distance between the crowned portions 5 and the circumterentially-facing side walls 16 is about a few μm, there is a risk that the crowned portions 5 as well as the straight-portion ends 7 are contacted with the circumferentially-facing side wall 16, thereby generating a further large frictional force. In this way, the straight-portion ends 7 and the crowned portions 5 of the roller 4 are contacted with the circumferentially-facing side walls 16, as a result of which a large frictional force is generated and thus cage noise is occurred.

Contrarily, according to the rolling bearing IB of the present invention, by setting the length B of the pocket straight portion 15 of the cage 10B to be equal to or smaller than the length A of the roller straight portion 6 of the roller 4, even if the cage 10 is inclined during rotation, the straight-portion ends 7 and the crowned portions 5 can be avoided from being contacted with the circumferentially-facing side walls 16, thereby preventing generation of a large frictional force and also suppressing cage noise.

The length B of the pocket straight portion 15 of the cage 10B is preferably less than the length A of the roller straight portion 6 of the roller 4, and also, because the cage 10B can be axially moved by the axial pocket clearance ΔP (see Fig. 14), the length B of the pocket straight portion 15 of the cage 10 is more preferably less than A-ΔP, which is obtained by subtracting the axial pocket clearance ΔP from the length A of the roller straight portion 6 of the roller 4. But, because strength of the cage 10B cannot be ensured if the length B of the pocket straight portion 15 is excessively small, the length B of the pocket straight portion 15 is preferably equal to or greater than 0.5 mm.

Next, the effects of the rolling bearing of the second embodiment were verified on the basis of Examples and Comparative example as described below.

First, rolling bearings of a bearing number N1011KR (inner diameter: $\varphi$55mm, outer diameter: $\varphi$90mm, width: 18mm, outer ring: no collar, inner ring: both collars, roller diameter: $\varphi$8, roller length: 8 mm) were prepared. A radial clearance after being incorporated was set to -15$\mu$m, and as a lubricant, NBU8EP (produced by NOK KLÜBER Co., Ltd.) of 1.5 cc was potted.

Using, as cages, resinous cage made of polyetheretherketone (PEEK) containing carbon fibers, cage noises at revolutions per minute of 4000 to 12000 rpm were evaluated while varying a relationship between a length B of a pocket straight portion and a length A of a roller straight portion.

As shown in Table 6, a case where the relationship between the length B of the pocket straight portion and the length A of the roller straight portion was set to be B = 0.3xA was designated as Example 1, a case where being set to be B = 0.6xA was designated as Example 2, a case where being set to be B = A was designated as Example 3, and a case where being set to be B = 1.5×A was designated as Comparative example.

In Table 6, results of the cage noise evaluation are shown in three grades. The evaluation was performed by three grades of ○, Δ, and ×. ○ represents a case which has no cage noise and thus no problem at all in use, Δ represents a case which has a low cage noise, but no problem in use, and × represents a case which has a high cage noise and thus cannot be used.

[Table 6]

|  | Example 1 (B = 0.3×A) | Example 2 (B = 0.6xA) | Example 3 (B = A) | Comparative Example (B = 1.5×A) |
|---|---|---|---|---|
| 4000 rpm | Δ | Δ | Δ | × |
| 6000 rpm | Δ | Δ | Δ | × |
| 8000 rpm | Δ | Δ | Δ | × |
| 10000 rpm | Δ | Δ | Δ | × |
| 12000 rpm | ○ | ○ | Δ | × |

From the results of Table 6, it is concluded that Comparative example, in which the length B of the pocket straight portion of the cage is set to be longer than the length A of the roller straight portion, has cage noise occurred to be too high to be used, regardless of revolutions per minute. Contrarily, it can be found that Examples 1 to 3, in which the length B of the pocket straight portion of the cage is set to be equal to or smaller than the length A of the roller straight portion, have low cage noises or are classified as no cage noise, regardless of revolutions per minute, and thus, cage noise are suppressed.

As described above, according to the rolling bearing 1B of the present embodiment, by setting the length B of the pocket straight portion 15 of the cage 10B to be equal to or smaller than the length A of the roller straight portion 6, sliding contact between the straight-portion ends 7 of the roller and the pocket straight portions 15 when the cage 10B is inclined can be suppressed, thereby suppressing cage noise.

In addition, according to the rolling bearing 1B of the present invention, because the length of the pocket straight portion 15 has been shortened, grease can easily penetrate into the roller straight portion 6, thereby providing an enhanced lubrication property.

The present invention is not limited to the foregoing embodiment and, for example, the circumferentially-facing side walls 16 may be adapted to form a circular arc-shaped surface along a curvature of the roller 4 as viewed in the rotation axis direction, as long as having the pocket straight portions 15 becoming a straight shape as viewed in a plan view.

Further, although the rolling bearing 1B has been described with the cage 10B being guided in an outer ring guided manner in the foregoing embodiment, the cage 10B may be guided in an inner ring guided manner.

(Third Embodiment)

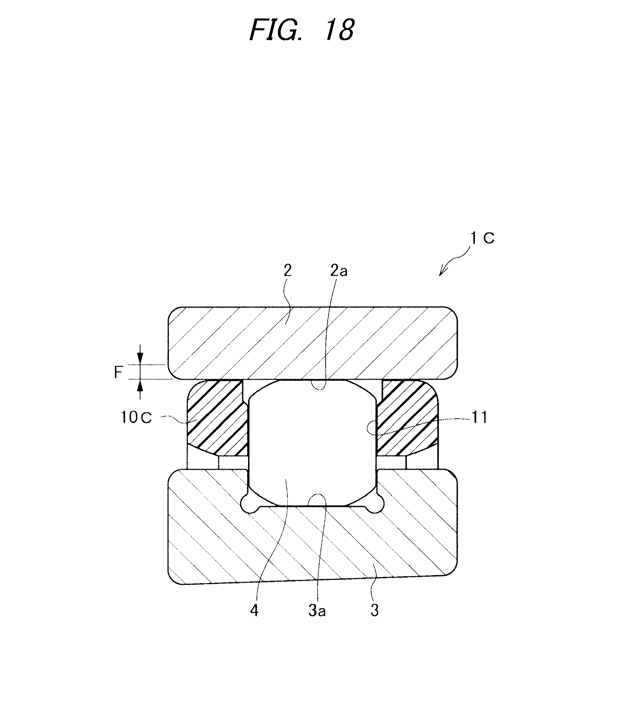

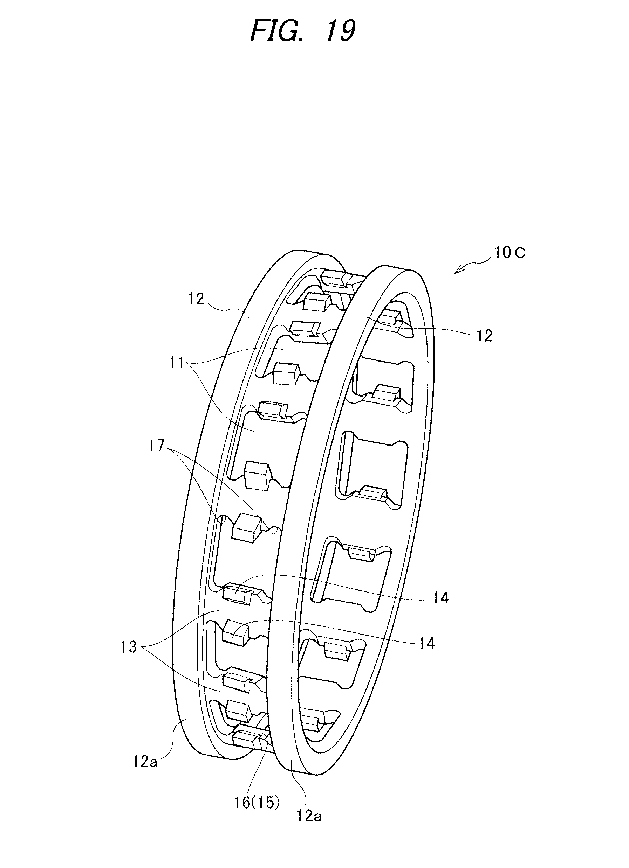

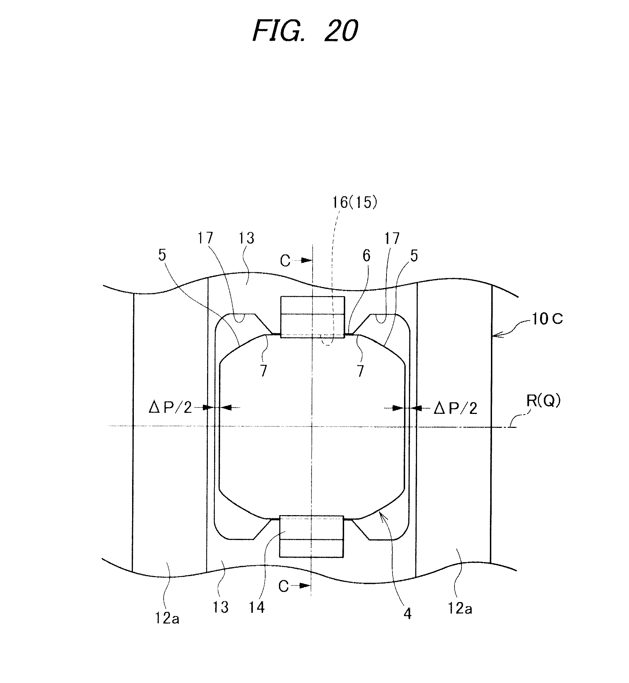

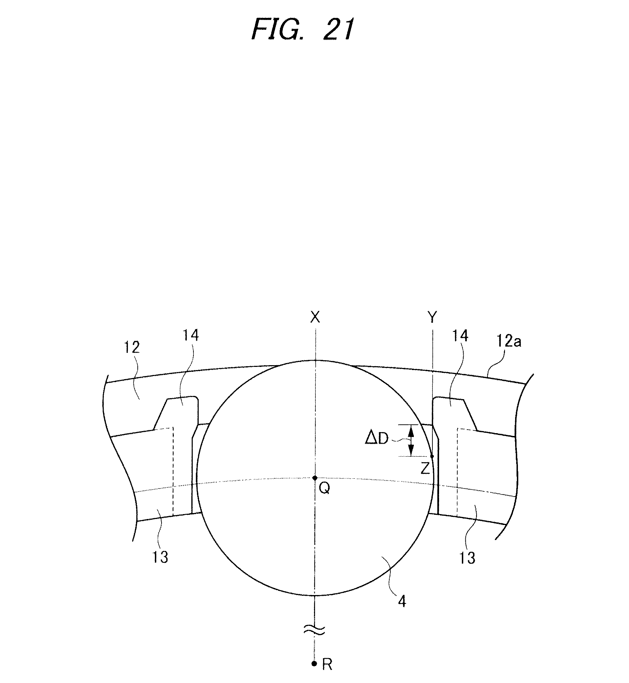

Next, a rolling bearing according to a third embodiment of the present invention will be described in detail with reference to the drawings, Fig. 18 is a sectional view of a rolling bearing according to an embodiment of the invention, Fig. 19 is a perspective view of a cage of Fig. 18, Fig. 20 is a plan view illustrating a portion of the rolling bearing of Fig. 18, and Fig. 21 is a sectional view taken along the line C-C of Fig. 20.

The rolling bearing 1C according to the third embodiment of the present invention, as shown in Fig. 18, includes an outer ring 2 having an outer ring raceway surface 2a on an inner peripheral surface thereof, an inner ring 3 having an inner ring raceway surface 3a on an outer peripheral surface thereof, a plurality of rollers (rolling elements) 4 rollably arranged between the outer ring raceway surface 2a and the inner ring raceway surface 3a, and a cage 10C having a plurality of pockets 11 formed at given intervals in a circumferential direction thereof for respectively retaining the plurality of rollers 4, and uses grease lubrication.

The roller 4, as shown in Fig. 20, is formed by crowned portions 5, 5, which are formed by gradually reducing diameters of both sides thereof in a direction of a rotation axis Q over the entire periphery as it goes toward each end thereof, and a roller straight portion 6, which are formed by connecting the crowned portions 5, 5 with each other to have a constant diameter dimension. Lengths of the crowned portions 5, 5 and the roller straight portion 6, an inclined angle between the crowned portions 5, 5 and the roller straight portion 6, and the like are preferable to be optionally set depending on use conditions or use purposes, and accordingly are not particularly limited herein.

As shown in Figs. 19 to 21, the cage 10C has a pair of ring portions 12 arranged side by side in an axial direction thereof and a plurality of bar portions 13 arranged at given intervals in a circumferential direction thereof for connecting between both ring portions 12, and the pockets 11 are formed by the pair of ring portions 12 and the adjacent bar portions 13.

At an axially middle location on each side of the bar portion 13 with respect to the circumferential direction, a pocket straight portion 15 having a straight shape is formed. The pocket straight portion 15 is formed to be parallel to a rotation axis R of the cage 10C and forms a circumferentially-facing side wall 16. Thus, in a state in which the cage 10C is not inclined, the rotation axis R of the cage 10C and the rotation axis Q of the roller 4 are coincided with each other as viewed in a plan view, and therefore, the pocket straight portions 15 (circumferentially-facing side walls 16) and the roller straight portion 6 are adapted to be parallel to each other (see Fig. 14). The circumferentially-facing side walls 16 oppose the roller straight portion 6, which is a rolling surface of the roller 4, and serve as a rolling element retaining surface.

Also, at the axially middle location on each side of the bar portion 13 with respect to the circumferential direction, a stopper portion 14 is provided to protrude from a radially outer surface of the bar portion 13 and to have a side surface slightly protruding and extending from the circumferential direction side surface of the circumferentially-facing side wall 16 of the bar portion 13 toward the roller 4 so as to reliably retain the cylindrical roller 4.

The circumferentially-facing side walls 16 form a flat surface as viewed from the rotation axis direction, and a radial clearance ΔD is provided between an inner surface of the stopper portion 14 of the cage 10C and an intersection point Z between the roller 4 and a line Y, which is drawn from the inner surface of the stopper portion 14 to be parallel to a line segment X connecting the rotation axis R and the rotation axis Q to each other (see Fig. 21). In the axial direction, an axial pocket clearance ΔP (ΔP/2 on either side of the roller 4 in the circumferential direction) is provided between the roller 4 and the pocket 11 (see Fig. 20).

Also, at both axial ends on each side of the bar portions 13 with respect to the circumferential direction, grease reservoirs 17 are provided to be recessed from the circumferentially-facing side wall 16.

The cage 10C is an outer ring guided type, in which outer peripheral surfaces 12a of both ring portions 12 having a diameter larger than radially outer surfaces of the bar portions 13 are guided by the outer ring raceway surface 2a.

Subsequently, as a feature of the present invention, a radial clearance between the roller 4 and the cage 10C will be described.

The size of the radial clearance ΔD is set to be twice or greater than the guide clearance ΔE but not greater than the chamfered length F of the outer ring 2 as the guiding ring, the guide clearance ΔE being a difference between an inner diameter of the outer ring (a radial distance of the outer ring raceway surface 2a as measured along a line passing through a rotation axis of the rolling bearing 1C), and an outer diameter of the cage (a radial distance of the outer peripheral surfaces 12a of a pair of ring portions 12 as measured along a line passing through the rotation axis of the rolling bearing 1C). Here, the chamfered length F is a radial length of chamfered portions obtained by chamfering a corner between an inner peripheral surface and end surfaces of the outer ring 2.

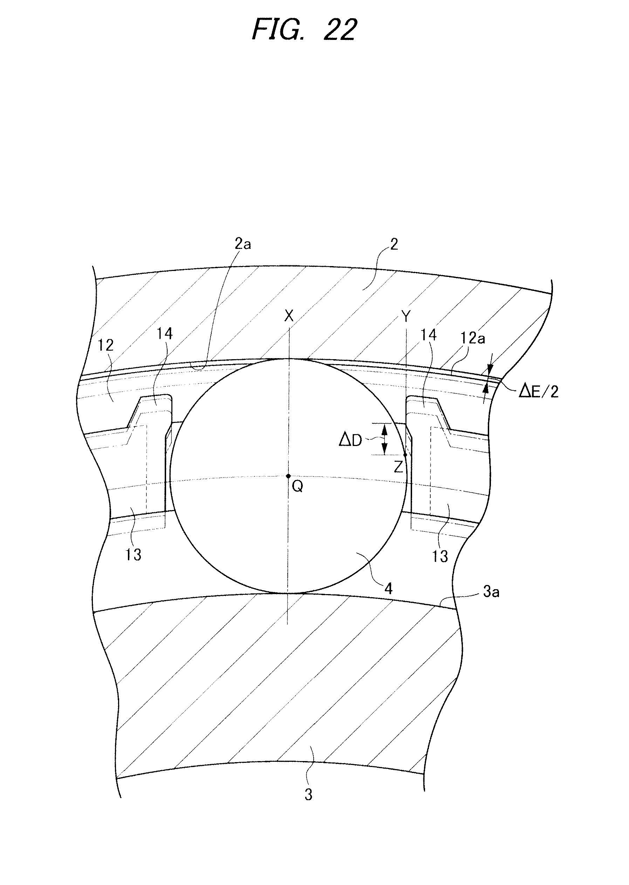

The reason will be now described on the basis of Fig. 22. Fig. 22 is a sectional view of the rolling bearing explaining movement and deformation of the cage.

In the rolling bearing 1C, a guide clearance ΔE/2 is obtained on each of the roller 4 side shown in Fig. 22 and the opposite side (a location apart from the roller 4 shown in Fig. 22 by 180°). Therefore, on the roller 4 side shown in Fig. 22, the cage 10C can move radially inward by $\Delta E/2$. In Fig. 22, a solid line shows a non-rotation neutral position of the cage 10C, i.e., a position of the cage 10C in a state in which a revolution axis (rotation axis of the rolling bearing 1C) of the rollers is coincided with the rotation axis R of the cage 10C, and a one-dotted chain line shows a state in which the cage 10C has been moved radially inward by $\Delta E/2$. Thus, theoretically, if the radial clearance $\Delta D$ is larger than $\Delta E/2$, then the roller 4 is not contacted with the cage 10C.

However, if the cage 10C is whirled during high-speed rotation, the cage 10C is deformed by being pressed against the outer ring 2 due to a force corresponding to the revolution per minute thereof. Namely, if the cage 10C is moved radially inward by $\Delta E/2$ to be further pressed against the inner peripheral surface of the outer ring, the cage is deformed into an elliptical shape, and thus on the roller 4 side shown in Fig. 22, the cage 10C is moved radially further inward. A two-dotted chain line in Fig. 22 shows a state in which the cage 10C has been moved (deformed) radially further inward by whirling. In Fig. 22, deformation of the cage 10 in the circumferential direction thereof has been ignored.

When the cage 10C is moved radially further inward by whirling, the radial clearance $\Delta D$ is further reduced. Although an amount of the radial clearance $\Delta D$ to be reduced due to whirling can be varied depending upon a material, a shape or the like of the cage 10C, the radial clearance AD in the present invention is overall set to be twice or greater than the guide clearance $\Delta E$, to ensure that movement of the cage 10C due to whirling is allowed by 1.5 times of the guide clearance $\Delta E$ or more, and also considering the movement amount of $\Delta E/2$. Therefore, even if the cage 10C is whirled, sliding contact between the roller 4 and the cage 10 is prevented. Thus, occurrence of friction force due to sliding contact between the roller 4 and the cage 10C is suppressed, thereby suppressing occurrence of cage noise.

If the radial clearance $\Delta D$ is excessively large, rollers 4 are dislocated, and thus when an assembly, in which the inner ring 3, the cage 10C and the rollers 4 are assembled together, is inserted in the outer ring 2 from an axial direction, an end of the outer ring interferes with the rollers 4, as a result of which the assembly is difficult to be incorporated therein. Therefore, the radial clearance $\Delta D$ is set to be equal to or smaller than the chamfered length F (see Fig. 18) of the outer ring 2, which is the guiding ring. Thus, when the assembly, in which the inner ring 3, the cage 10C and the rollers 4 are assembled together, is inserted in the outer ring 2 from an axial direction, interference between the end of the outer ring and the rollers 4 is suppressed, thereby suppressing deterioration of assembly ability thereof.

Next, the effects of the rolling bearing of the third embodiment were verified on the basis of Examples and Comparative example as described below.

First, cylindrical roller bearings of a bearing number N1011KR (inner diameter: $\varphi$ 55mm, outer diameter: $\varphi$ 90mm, width: 18mm, outer ring: no collar, inner ring: both collars, roller diameter: (p 8. roller length: 8 mm) were prepared. A radial clearance after being incorporated was set to -15$\mu$m, and as a lubricant, NBU8EP (produced by NOK KLÜBER Co., Ltd.) of 1.5 cc was potted.

Using, as cages, resinous cage made of polyetheretherketone (PEEK) containing carbon fibers, cage noises at revolutions per minute of 4000 to 12000 rpm were evaluated while varying a radial clearance $\Delta D$ between the roller and the cage.

As shown in Table 7, a case where the radial clearance $\Delta D$ was set to be 2 times of the guide clearance $\Delta E$ was designated as Example 1, a case where the radial clearance $\Delta D$ was set to be 3 times of the guide clearance $\Delta E$ was designated as Example 2, and a case where the radial clearance $\Delta D$ was set to be 1.5 times of the guide clearance $\Delta E$ was designated as Comparative example.

In Table 7, results of the cage noise evaluation are shown in three grades. The evaluation was performed by three grades of $\bigcirc$, $\Delta$, and $\times$. $\bigcirc$ represents a case which has no cage noise and thus no problem at all in use, $\Delta$ represents a case which has a low cage noise, but no problem in use, and $\times$ represents a case which has a high cage noise and thus cannot be used.

[Table 7]

|  | Example 1 ($\Delta D = 2 \times \Delta E$) | Example 2 ($\Delta D = 3 \times \Delta E$) | Comparative Example ($\Delta D = 1.5 \times \Delta E$) |
|---|---|---|---|
| 4000 rpm | $\Delta$ | $\bigcirc$ | $\times$ |
| 6000 rpm | $\Delta$ | $\bigcirc$ | $\times$ |
| 8000 rpm | $\bigcirc$ | $\bigcirc$ | $\times$ |
| 10000 rpm | $\bigcirc$ | $\bigcirc$ | $\times$ |
| 12000 rpm | $\bigcirc$ | $\bigcirc$ | $\times$ |

From the results of Table 7, it is concluded that Comparative example, in which the radial clearance $\Delta D$ is set to be 1.5 times of the guide clearance $\Delta E$, has cage noise occurred to be too high to be used, regardless of revolutions per minute. Namely, it is believed that the reason is because, when an amount of the radial clearance ΔD to be reduced due to whirling is ensured by the guide clearance ΔE, except a movement amount of ΔE/2 (1.5×ΔE-ΔE/2), the radial clearance ΔD is insufficient so that rollers are contacted with the cage to occur a large frictional force, thereby occurring cage noise.

Contrarily, it can be found that Examples 1 and 2, in which the radial clearance ΔD is set to be twice or greater than the guide clearance ΔE, have low cage noises or are classified as no cage noise, regardless of revolutions per minute, and thus, cage noise are suppressed.

As described above, according to the rolling bearing 1C of the present embodiment, by setting the radial clearance ΔD to be twice or greater than the guide clearance ΔE, even if the cage 10C is whirled during high-speed rotation and thus deformed by being pressed against the outer ring 2 due to a force corresponding to the revolution per minute thereof, the radial clearance can be kept sufficiently large, thereby further suppressing occurrence of cage noise. In addition, because friction between the cage 10C and the rollers 4 is not increased, seizing due to an abnormal temperature rise can be also prevented.

In addition, by setting the radial clearance ΔD to be equal to or smaller than the chamfered length F of the outer ring 2, which is the guiding ring, when the assembly, in which the inner ring 3, the cage 10C and the rollers 4 are assembled together, is inserted in the outer ring 2 from an axial direction, interference between the end of the outer ring and the rollers 4 can be suppressed, thereby suppressing deterioration of assembly ability thereof.

The present invention is not limited to the foregoing embodiments and, for example, the rollers 4 may form be formed with the crowned portions 5, 5, and may a simple cylindrical roller formed by a straight portion 6.

Further, although the rolling bearing 1C has been described with the cage 10C being guided in an outer ring guided manner in the foregoing embodiment, the cage 10C may be guided in an inner ring guided manner.

This application is based on Japanese Patent Application Nos. 2012-139973, 2012-139974 and 2012-139975 filed on June 21, 2012, the entire contents of which are incorporated herein by reference.

Explanation of Reference Signs

| | |
|---|---|
| 1, 1A, 1B, 1C | Rolling Bearing |
| 2 | Outer Ring |
| 3 | Inner Ring |
| 4, 4A | Roller |
| 5 | Crowned Portion |
| 6 | Roller Straight Portion |
| 10, 10A, 10B, 10C | Cage |
| 11 | Pocket |
| 12 | Ring Portion |
| 13 | Bar Portion |
| 14 | Stopper Portion |
| 15 | Pocket Straight portion |
| 18 | Annular Protrusion |
| 18a | Outer Peripheral Surface (Cage Guide Surface) |
| 19b | Grease Reservoir |
| A | Length of Roller Straight Portion |
| B | Length of Pocket Straight Portion |
| ΔD | Radial Pocket Clearance |
| ΔE | Guide Clearance |
| F | Chamfered Length |
| ΔL1 | Width of Cage Guide Surface on One Side |
| ΔL2 | Width of Cage Guide Surface on the Other Side |
| ΔL | Width of Cage Guide Surface |
| ΔP | Axial Pocket Clearance |
| Q | Rotation Axis of Roller |
| R | Rotation Axis of Cage |

**Claims**

1.  A rolling bearing comprising an outer ring, an inner ring, a plurality of rollers rollably arranged between the outer ring and the inner ring, and a cage having a plurality of pockets formed at given intervals in a circumferential direction to retain the plurality of rollers respectively, the cage being guided in an outer ring guided or inner ring guided manner, **characterized in that** the cage comprises a cage guide surface on each side with respect to an axial direction of the rollers, and
    **in that** the following expressions (I) and (II) are satisfied,

    $$(I) \quad \Delta P \leq \Delta L1 \leq 4 \times \Delta P$$

    $$(II) \quad \Delta P \leq \Delta L2 \leq 4 \times \Delta P$$

    wherein $\Delta L1$ is a width of the cage guide surface on one side, $\Delta L2$ is a width of the cage guide surface on the other side, and $\Delta P$ is an axial pocket clearance.

2.  A rolling bearing comprising an outer ring, an inner ring, a plurality of rollers rollably arranged between the outer ring and the inner ring, and a cage having a plurality of pockets formed at given intervals in a circumferential direction to retain the plurality of rollers respectively, the cage being guided in an outer ring guided or inner ring guided manner, **characterized in that** the cage comprises a cage guide surface on one side with respect to an axial direction of the rollers, and
    **in that** the following expression (III) is satisfied,

    $$(III) \quad \Delta P \leq \Delta L \leq 4 \times \Delta P$$

    wherein $\Delta L$ is a width of the cage guide surface, and $\Delta P$ is an axial pocket clearance.

3.  The rolling bearing according to claim 1 or 2, wherein the rolling bearing is used with grease lubrication.
    wherein the cage provides a grease reservoir between the rollers and the cage guide surface, and
    wherein a width of the grease reservoir is equal to or greater than the width of the cage guide surface.

4.  The rolling bearing according to any one of claims 1 to 3, wherein the cage guide surface of the cage is provided axially inward of an end of a guiding surface of the guiding ring; and
    wherein a distance from the cage guide surface to the end of the guiding surface of the guiding ring is equal to or greater than the width of the cage guide surface.

5.  The rolling bearing according to any one of claims 1 to 4, wherein a radial pocket clearance between the rollers and the cage is twice or greater than a guide clearance but not greater than a chamfered length of the guiding ring.

6.  The rolling bearing according to claim 5, wherein the cage comprises a pair of ring portions arranged side by side in the axial direction and a plurality of bar portions arranged at given intervals in the circumferential direction to connect the ring portions to each other,
    wherein the bar portion comprises, at an axially middle location on each side with respect to the circumferential direction, a stopper portion protruding toward the roller, and
    wherein the radial pocket clearance is a distance between an inner surface of the stopper portion and a point at which a line intersects the roller, the line being drawn from the inner surface of the stopper portion and parallel to a line segment connecting a rotation axis of the cage and a rotation axis of the roller to each other.

7.  The rolling bearing according to any one of claims 1 to 6, wherein the roller comprises crowned portions formed by gradually reducing a diameter toward an end at each side with respect to the axial direction and along the entire periphery, and a roller straight portion formed by connecting the crowned portions to each other with a constant diameter,
    wherein the pocket is formed with a pocket straight portion having a straight shape at a portion facing the roller straight portion, and

wherein the length of the pocket straight portion is equal to or shorter than the length of the roller straight portion.

8. The rolling bearing according to claim 7, wherein the length of the pocket straight portion is shorter than a length obtained by subtracting the axial pocket clearance from the length of the roller straight portion.

9. A rolling bearing comprising an outer ring, an inner ring, a plurality of rollers rollably arranged between the outer ring and the inner ring, and a cage having a plurality of pockets formed at given intervals in a circumferential direction to retain the plurality of rollers respectively, the cage being guided in an outer ring guided or inner ring guided manner, **characterized in that** the roller comprises crowned portions formed by gradually reducing a diameter toward an end at each side with respect to an axial direction and along the entire peripheryf, and a roller straight portion formed by connecting the crowned portions to each other with a constant diameter,
wherein the pocket is formed with a pocket straight portion having a straight shape at a portion facing the roller straight portion, and
wherein the length of the pocket straight portion is equal to or shorter than the length of the roller straight portion.

10. The rolling bearing according to claim 9, wherein the length of the pocket straight portion is shorter than a length obtained by subtracting an axial pocket clearance from the length of the roller straight portion.

11. The rolling bearing according to claim 9 or 10, wherein the rolling bearing is used with grease lubrication.

12. A rolling bearing comprising an outer ring, an inner ring, a plurality of rollers rollably arranged between the outer ring and the inner ring, and a cage having a plurality of pockets formed at given intervals in a circumferential direction to retain the plurality of rollers respectively, the cage being guided in an outer ring guided or inner ring guided manner, **characterized in that** a radial clearance between the roller and the cage is twice or greater than of a guide clearance but not greater than a chamfered length of the guiding ring.

13. The rolling bearing according to claim 12, wherein the cage comprises a pair of ring portions arranged side by side in an axial direction and a plurality of bar portions arranged at given intervals in the circumferential direction to connect the ring portions to each other,
wherein the bar portion comprises, at an axially middle location on each side with respect to the circumferential direction, a stopper portion protruding toward the roller, and
wherein the radial clearance is a distance between an inner surface of the stopper portion and a point at which a line intersects the roller, the line being drawn from the inner surface of the stopper portion and parallel to a line segment connecting a rotation axis of the cage and a rotation axis of the roller to each other.

14. A spindle device for a machine tool, the spindle device comprising the rolling bearing according to any one of claims 1 to 13.

FIG. 1

# FIG. 2

# FIG. 3

# FIG. 4

## FIG. 5

(a)

(b)

## FIG. 6

# FIG. 7

(a)

(b)

# FIG. 8

(a)

(b)

# FIG. 9

FIG. 10

*FIG. 11*

## FIG. 12

# FIG. 13

# FIG. 14

FIG. 15

## FIG. 16

(a)

(b)

## FIG. 17

# FIG. 18

# FIG. 19

# FIG. 20

# FIG. 21

# FIG. 22

## INTERNATIONAL SEARCH REPORT

| | International application No. |
|---|---|
| | PCT/JP2013/066930 |

**A. CLASSIFICATION OF SUBJECT MATTER**
*F16C33/46*(2006.01)i, *B23B19/02*(2006.01)i, *F16C19/26*(2006.01)i

According to International Patent Classification (IPC) or to both national classification and IPC

**B. FIELDS SEARCHED**

Minimum documentation searched (classification system followed by classification symbols)
F16C33/46, B23B19/02, F16C19/26

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-196513 A  (NSK Ltd.),<br>06 October 2011 (06.10.2011),<br>paragraphs [0016] to [0020], [0024] to [0048];<br>fig. 1 to 6<br>(Family: none) | 9-11,14<br>1-8,12-13 |
| A | JP 2001-140870 A  (NSK Ltd.),<br>22 May 2001 (22.05.2001),<br>paragraphs [0011] to [0017], [0028] to [0059];<br>fig. 1 to 9<br>(Family: none) | 1-14 |
| A | JP 2004-003577 A  (NSK Ltd.),<br>08 January 2004 (08.01.2004),<br>paragraphs [0017] to [0050]; fig. 1 to 18<br>& US 2002/0097939 A1    & DE 10152847 A1 | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 July, 2013 (08.07.13) | 23 July, 2013 (23.07.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/066930

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-250412 A  (NTN Corp.),<br>29 October 2009 (29.10.2009),<br>paragraphs [0017] to [0030]; fig. 1 to 5<br>(Family: none) | 1-14 |

Form PCT/ISA/210 (continuation of second sheet) (July 2009)

**EP 2 865 910 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004019921 A
- JP H11344035 A
- JP 2000081042 A

- JP 2012139973 A
- JP 2012139974 A
- JP 2012139975 A